(19) Europäisches Patentamt / European Patent Office / Office européen des brevets

(11) **EP 4 541 462 A1**

(12) **EUROPEAN PATENT APPLICATION**

(43) Date of publication:
23.04.2025 Bulletin 2025/17

(21) Application number: 24205538.2

(22) Date of filing: 09.10.2024

(51) International Patent Classification (IPC):
**B01L 3/00** (2006.01)

(52) Cooperative Patent Classification (CPC):
**B01L 3/502761; B01L 3/50853;** B01L 2200/0642;
B01L 2200/0673; B01L 2200/0689; B01L 2200/142;
B01L 2300/0819; B01L 2300/0829;
B01L 2300/0864; B01L 2300/0893

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 13.10.2023 JP 2023177411
13.10.2023 JP 2023177460

(71) Applicant: SYSMEX CORPORATION
Kobe-shi
Hyogo 651-0073 (JP)

(72) Inventors:
• **Okuda, Masaki**
**651-0073 Kobe-shi, Hyogo (JP)**
• **Yamawaki, Koya**
**651-0073 Kobe-shi, Hyogo (JP)**
• **Kawasaki, Kana**
**651-0073 Kobe-shi, Hyogo (JP)**
• **Iwanaga, Niina**
**651-0073 Kobe-shi, Hyogo (JP)**
• **Akama, Kenji**
**651-0073 Kobe-shi, Hyogo (JP)**

(74) Representative: **Hoffmann Eitle
Patent- und Rechtsanwälte PartmbB
Arabellastraße 30
81925 München (DE)**

(54) **SOLUTION REPLACEMENT METHOD AND DIGITAL ASSAY METHOD**

(57) A solution replacement method according to an embodiment may be a solution replacement method of replacing a solution in a plurality of microwells (M) formed on a substrate (B). The method may include: replacing an immiscible liquid that is immiscible to a first solution and seals the plurality of microwells (M) that are filled with the first solution, with a gas; and filling the plurality of microwells (M) with a second solution by introducing the second solution onto the substrate (B) on which the immiscible liquid has been replaced with the gas.

FIG.1

**Description**

CROSS REFERENCE TO RELATED APPLICATIONS

This application claims priority from prior Japanese Patent Applic ations No. 2023-177411, filed on October 13, 2023, and No. 2023-17746 0, filed on October 13, 2023, the entire contents of which are incorporat ed herein by reference.

BACKGROUND

The disclosure may relate to a solution replacement method and a digital assay method.

A method of replacing a solution in microwells is known. For example, Non-Patent Document 1 discloses a method of replacing a solution in microwells from a lysis buffer to a RT reaction mix, by removing perfluorinated oil that seals the plurality of microwells filled with the lysis buffer with a detergent-containing buffer.

Non-Patent Document 1: Scientific Reports volume 6,Article number: 33883 (2016) "An Automated Microwell Platform for Large-Scale Single Cell RNA-Seq"

However, the solution replacement method described above may not sufficiently remove the perfluorinated oil that seals the microwells. Accordingly, there is a possibility that the solution cannot be replaced in some of the microwells.

An object of an embodiment of the disclosure may be to provide a method to improve an accuracy of a solution replacement in microwells.

SUMMARY

A solution replacement method according to an aspect of the disclosure may be a solution replacement method of replacing a solution in a plurality of microwells (M) formed on a substrate (B). The solution replacement method may include: replacing an immiscible liquid that is immiscible to a first solution and seals the plurality of microwells (M) that are filled with the first solution, with a gas; and filling the plurality of microwells (M) with a second solution by introducing the second solution onto the substrate (B) on which the immiscible liquid has been replaced with the gas.

According to the solution replacement method, the following steps are executed: replacing an immiscible liquid that is immiscible to a first solution and seals the plurality of microwells (M) that are filled with the first solution, with a gas; and filling the plurality of microwells (M) with a second solution by introducing the second solution onto the substrate (B) on which the immiscible liquid has been replaced with the gas. Accordingly, in the solution replacement method, it is possible to prevent the immiscible liquid from remaining in or around some of the plurality of microwells (M). Therefore, it is possible to prevent from hindering the replacement of the first solution with the second solution due to immiscible liquid remained in or around some of the plurality of microwells (M), thereby improving an accuracy of the solution replacement in the plurality of microwells.

A digital assay method according to an aspect of the disclosure may be a digital assay method of performing a multi-stage digital assay using a plurality of microwells (M) formed on a substrate (B). The digital assay method may include: performing a first assay in the plurality of microwells (M) that are filled with a first assay reagent and sealed with an immiscible liquid that is immiscible to the first assay reagent; replacing the immiscible liquid sealing the plurality of microwells (M) with a gas; filling the plurality of microwells (M) with a second assay reagent by introducing the second assay reagent onto the substrate (B) in which the immiscible liquid has been replaced by the gas; sealing the plurality of microwells (M) that are filled with the second assay reagent with a second immiscible liquid that is immiscible to the second assay reagent, by introducing the second immiscible liquid onto the substrate (B); and performing a second assay in the plurality of microwells (M) that are filled with the second assay reagent and sealed with the second immiscible liquid.

According to the digital assay method, the following steps are executed: performing a first assay in the plurality of microwells (M) that are filled with a first assay reagent and sealed with an immiscible liquid that is immiscible to the first assay reagent; replacing the immiscible liquid sealing the plurality of microwells (M) with a gas; filling the plurality of microwells (M) with a second assay reagent by introducing the second assay reagent onto the substrate (B) in which the immiscible liquid has been replaced by the gas; sealing the plurality of microwells (M) that are filled with the second assay reagent with a second immiscible liquid that is immiscible to the second assay reagent, by introducing the second immiscible liquid onto the substrate (B); and performing a second assay in the plurality of microwells (M) that are filled with the second assay reagent and sealed with the second immiscible liquid. Accordingly, it may be possible to improve an accuracy of the solution replacement in the plurality of microwells. Further, according to the digital assay method, a plurality of digital assays including at least the first digital assay and the second digital assay can be continuously performed in the common microwells through the solution replacement method.

According to the aspect described above, it may be possible to provide a method to improve the accuracy of the solution replacement in the microwells.

BRIEF DESCRIPTION OF DRAWINGS

FIG. 1 is a diagram illustrating a schematic view of an overview of a solution replacement method.

FIG. 2 is a diagram illustrating a schematic view of an overview of a digital assay method and a multi-step digital assay method

FIG. 3 is a diagram illustrating a schematic view of an overview of a multi-step digital assay method using a solution replacement method.

FIG. 4 is a diagram illustrating a view of an overall structure of a closed type control system according to a first embodiment.

FIG. 5 is a diagram illustrating a schematic view of an overview of a three-phase plug formation method.

FIG. 6 is a diagram illustrating a schematic view of an overview of a three-phase plug addition method.

FIG. 7 is a diagram illustrating a schematic view of an overview of a two-phase plug formation method.

FIG. 8 is a diagram illustrating a schematic view of an overview of a two-phase plug addition method

FIG. 9 is a diagram illustrating an example of a cross-sectional view of a closed type microwell device.

FIG. 10 is a diagram illustrating an example of a top view of the closed type microwell device.

FIG. 11 is a diagram illustrating a view of an overall configuration of an open type control system according to a second embodiment.

FIG. 12 is a diagram illustrating an example of a cross-sectional view of an open type microwell device.

FIG. 13 is a diagram illustrating an example of a top view of the open type microwell device

FIG. 14 is a diagram illustrating a schematic view of an overview of a first example of a method of producing a closed type microwell device.

FIG. 15 is a diagram illustrating a schematic view of an overview of a second example of a method of producing a closed type microwell device.

FIG. 16 is a diagram illustrating a schematic view of a flow of Example 1.

FIG. 17 is a diagram illustrating a schematic view of a flow of a comparative example with respect to Example 1.

FIG. 18 is a diagram illustrating results of Example 1 and the comparative example.

FIG. 19 is a diagram illustrating a schematic view of a flow of Example 2.

FIG. 20 is a diagram illustrating experimental results of Example 2.

FIG. 21 is a diagram illustrating a schematic view of a flow of Example 3.

FIG. 22 is a diagram illustrating experimental results of Example 3.

FIG. 23 is a diagram illustrating a schematic view of a flow of Example 4.

FIG. 24 is a diagram illustrating experimental results of Example 4.

FIG. 25 is a diagram illustrating other experimental results of Example 4.

FIG. 26 is a diagram illustrating other experimental results of Example 4.

FIG. 27 is a diagram illustrating a schematic view of a flow of Example 5.

FIG. 28 is a diagram illustrating first experiment results of Example 5.

FIG. 29A is a graph illustrating a fluorescence intensity in A647ch fluorescence images. FIG. 29B is a graph illustrating a fluorescence intensity in FLch fluorescence images.

FIGS. 30A to 30C are graphs each illustrating a regression line indicating a relationship between the fluorescence intensity and an impurity concentration.

FIG. 31 is a diagram illustrating second experiment results of Example 5.

FIG. 32 is a diagram illustrating a schematic view of a flow of Example 6.

FIG. 33A is a diagram illustrating examples of fluorescent images A acquired in Step 4 in FIG. 32 and fluorescent images B acquired in Step 9 in FIG. 32. FIG. 33B is a diagram illustrating examples of fluorescence intensities of microwells in which ALPs are detected. FIG. 33C is a diagram illustrating examples of fluorescence intensities of microwells in which $\beta$-Gals are detected.

FIG. 34 is a diagram illustrating a schematic view of a flow of Example 7.

FIG. 35 is a diagram illustrating a schematic view of an analysis flow of Example 7.

FIGS. 36A and 36B are diagrams illustrating examples of detection results when Steps 2 to 11 in FIG. 34 are carried out using a sample prepared in Step 1 in FIG. 34 that contains no exosomes. FIGS. 36C and 36D are diagrams illustrating examples of detection results when Steps 2 to 11 in FIG. 34 are carried out using a sample prepared in Step 1 in FIG. 34 that contains 16 $\mu$g of exosomes per sample.

FIG. 37 is a diagram illustrating a view of other experimental results of Example 7.

DETAILED DESCRIPTION

Hereinafter, one or more embodiments of the disclosure will be described with reference to the drawings. Note that the same elements are given the same reference numerals and duplicated explanations are omitted. In addition, unless otherwise specified, positional relationships such as up, down, left, right, etc. are based on the positional relationships illustrated in the drawings. Further, the dimensional proportions of the drawings are not limited to those illustrated in the drawings. Furthermore, one or more embodiments described below are merely examples for explaining the disclosure, and the disclosure is not limited to these embodiments.

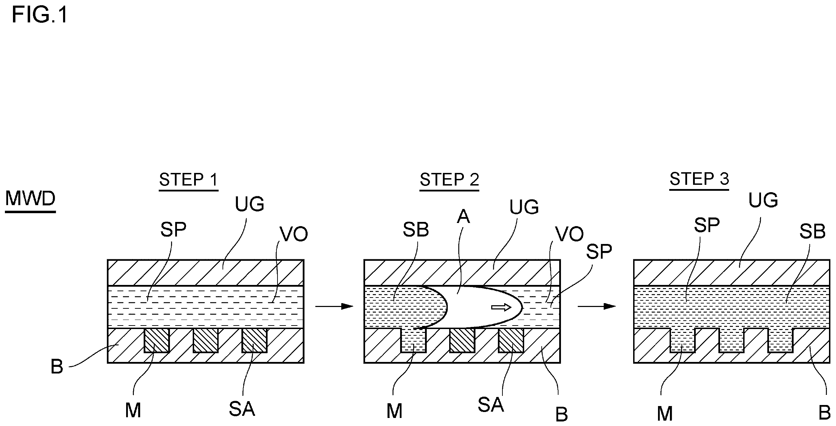

FIG. 1 is a diagram illustrating a schematic view of an overview of a solution replacement method according to an embodiment of the disclosure. The solution replacement method is carried out using a microwell device MWD. As illustrated in FIG. 1, the microwell device MWD includes a substrate B on which a plurality of microwells M are formed, and an upper glass UG arranged above the substrate B. The upper glass UG is arranged at a distance from the substrate B so that a space SP is formed between the substrate B and the upper glass UG. The solution replacement method according to an embodiment is a method of replacing a solution SA in the plurality of microwells M formed on the substrate B with another solution. In the solution replacement method, for example, the plurality of microwells M that is filled with the solution SA (first solution) are sealed with a volatile oil VO (immiscible liquid) (Step 1). In the solution replacement method, an air A (gas) is transported (introduced) into the space SP between the substrate B and the upper glass UG (second substrate) arranged above the substrate B, so as to replace the volatile oil VO with the air A (Step 2). Next, in the solution replacement method, a solution SB (second solution) is transported (introduced) into the space SP above the substrate B where the volatile oil VO has been replaced with the air A, so as to fill the plurality of microwells M with the solution SB (Step 3). In such a solution replacement method, it is possible to prevent the volatile oil VO from remaining in or around some of the plurality of microwells M. Therefore, it is possible to prevent from hindering the replacement of the solution SA with the solution SB due to the volatile oil VO remained in or around some of the plurality of microwells M, thereby improving an accuracy of the solution replacement (replacement of the solution SA to the solution SB) in the plurality of microwells M.

Any of the above described steps can be performed using an automated apparatus or manual method. For example, from the standpoint of reproducibility, it is preferable to carry out the procedure using an automated apparatus. The automated apparatus may include a device configured with an air pressure supplier such as a syringe pump, an air pressure pump, or the like, an air pressure controller such as a regulator or the like, a flow path such as tubing or the like, and a fluid controller such as a pinch valve, an electromagnetic valve, or the like. For example, the automated apparatus uses the syringe pump connected to Teflon tubing or the like, to inject a gas onto the substrate on which the plurality of microwells are formed or aspirates the immiscible liquid from the substrate, thereby replacing the immiscible liquid that seals the plurality of microwells filled with the first solution with the gas. The automated apparatus also uses the syringe pump to inject a second solution onto the substrate, so as to replace the first solution with the second solution. Further, the automated apparatus uses the syringe pump to inject a second immiscible fluid onto the substrate to seals the plurality of microwells that have been replaced with the second solution with the second immiscible fluid.

The automated apparatus may be, for example, a device including a pipette connected to a syringe pump. For example, the automated apparatus may use the pipette to aspirate immiscible liquid on the substrate formed with the plurality of microwells from above, so as to replace the immiscible liquid that seals the plurality of microwells filled with the first solution, with the gas. Further, the automated apparatus may use the pipette to dispense the second solution onto the substrate so as to replace the first solution with the second solution. Furthermore, the automated apparatus may use the pipette to dispense the second immiscible fluid onto the substrate so as to seal the plurality of microwells that have been replaced with the second solution with second immiscible liquid.

There are no particular limitations on situations in which the solution replacement method of the disclosure can be applied, and various details are possible. In the solution replacement method, for example, a bioparticle such as a cell, an exosome, or the like is individually introduced into each microwell. When the liquid transporting method sequentially introduces, into each microwell, a solution containing a surface antigen detection reagent for detecting antigens present on surfaces of biologically derived particles (bioparticles), a solution containing a reagent for extracting inclusions from the bioparticles, and a solution containing an inclusion detection reagent for detecting the extracted inclusions, which enables the bioparticles to be analyzed one by one. When the solution replacement method introduces a bioparticle such as a cell, an exosome, or the like into each microwell individually, seals a solution containing a reagent for detecting a biomarker in each microwell to detect the biomarker, and then replaces the solution in each microwell with a cell culture fluid, which enables single-cell screening.

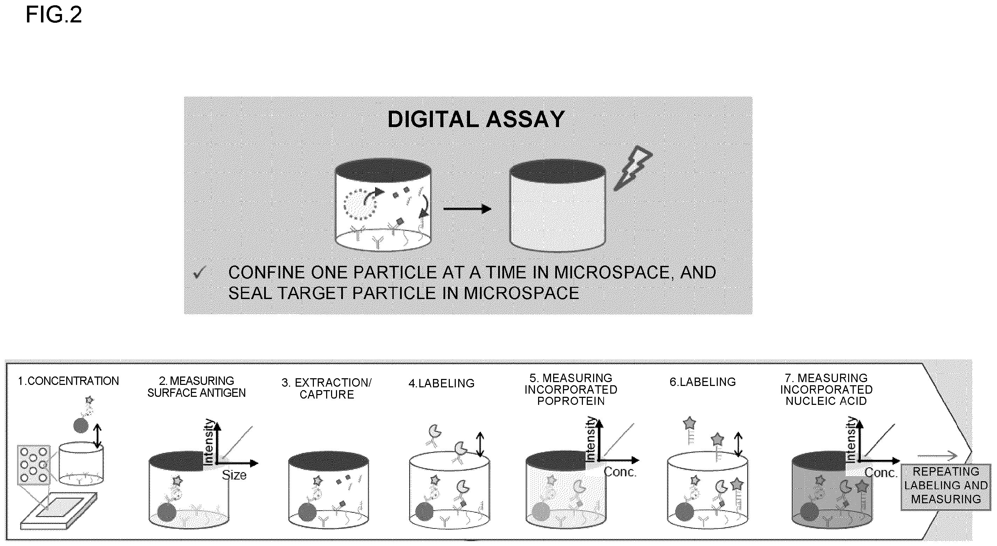

FIG. 2 is a diagram illustrating a schematic view of an overview of a digital assay method and a multi-step digital assay method. The digital assay method is an assay method that uses a plurality of microspaces such as microwells, droplets, etc. As illustrated in an upper part of FIG. 2, the digital assay method, for example, seals target particles respectively in the microspaces one by one, and counts any one of the microspaces that emits a signal such as fluorescence due to the presence of the microparticle as 1 while counting any one of the microspaces that does not emit the signal as 0, so as to qualitatively or quantitatively measure the microparticles.

As illustrated in a lower part of FIG. 2, the multi-step digital assay method may perform, for example, introducing into each microwell a solution concentrated to increase a concentration of target cells and sealing the cell one by one in each microwell ("1. Concentration"), measuring surface antigens of the cells ("2. Surface antigen measurement"), extracting inclusions (e.g., incorporated proteins and incorporated nucleic acids) from the cells using an extraction solution or the like and capturing the extracted inclusions ("3. Extraction/capture"), labeling the incorporated proteins using a labeling reagent ("4. Labeling"), measuring the incorporated proteins ("5. Incorporated protein measurement"), labeling the incorporated nucleic acids using a labeling reagent ("6. Labeling"), and measuring the incorporated nucleic acids ("7. Incorporated nucleic acid measurement"). The digital assay method is not limited to the above described techniques and may include other steps as appropriate.

Furthermore, in the digital assay method, it is possible to execute a plurality of digital assays continuously in the same space by replacing solutions in the microspace (multi-stage digital assay).

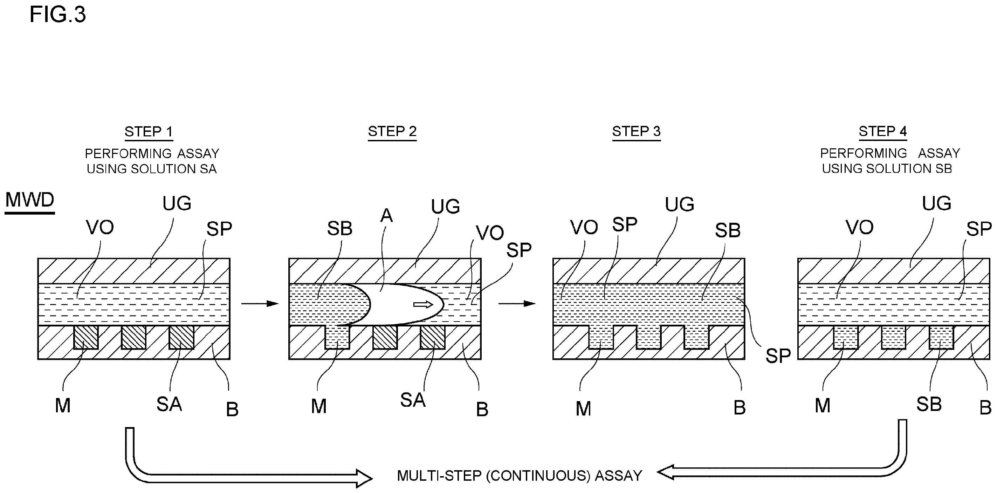

FIG. 3 is a diagram illustrating a schematic view of an overview of a digital assay method according to an embodiment when applied to a multi-stage digital assay method. As illustrated in FIG. 3, for example, in the multi-step digital assay method according to an embodiment, after bioparticles are first introduced, a plurality of microwells M in which a solution SA (first assay reagent) is filled are sealed with a volatile oil VO (immiscible liquid) which is immiscible to the solution SA (Step 1). Here, a first digital assay is performed to detect surface molecules of the bioparticles that are introduced in the plurality of microwells M (Step 1). Note that it may be preferable that the substrate B on which the plurality of microwells M are formed is formed of a transparent material in order to enable optical assay.

In the multi-step digital assay method, the volatile oil VO is replaced with an air A (gas), by introducing the air A into the space SP between the substrate B and the upper glass UG provided above the substrate B to push out the volatile oil VO (Step 2). Next, in the multi-step digital assay method, a solution SB (second assay reagent) is injected into the space SP between the substrate B and the upper glass UG where the volatile oil VO has been replaced by the air A, so as to fill the plurality of microwells M with the solution SB (Step 3).

Next, in this multi-step digital assay method, a volatile oil VO (second immiscible liquid) is introduced into the space SP between the substrate B and the upper glass UG to push out the solution SB from the space SP, so as to seal the plurality of microwells M filled with the solution SB with the volatile oil VO (Step 4). Here, for example, after extracting inclusions from the bioparticles in the plurality of microwells M, a second digital assay is performed to detect the inclusions (Step 4). Note that the volatile oil VO (the immiscible liquid) that seals the solution SA in Step 1 and the volatile oil VO (the second immiscible liquid) that seals the solution SB in Step 4 may be the same type or different types. In the following description, a case will be described in which the volatile oil VO (the immiscible liquid) that seals the solution SA in Step 1 and the volatile oil VO (the second immiscible liquid) that seals the solution SB are the same type.

Thus, in the multi-step digital assay method, the multiple digital assays including at least the first digital assay using the solution SA and the second digital assay using the solution SB are continuously performed in the common microwells through the solution replacement method. Note that in the multi-step digital assay method, the number of times the digital assays are performed is arbitrary as long as it is two or more times. The digital assays may also include a digital assay(s) other than the first digital assay for detecting the surface molecules of the bioparticles introduced in the microwells M and the second digital assay for detecting the inclusions after extracting the inclusions from the bioparticles in the microwells M.

<First embodiment>

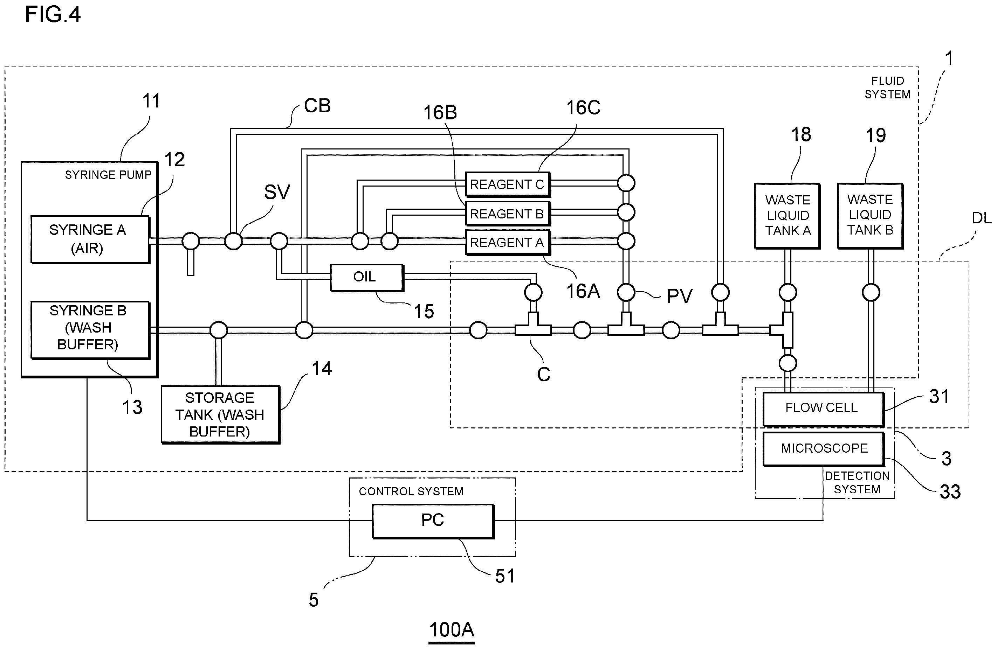

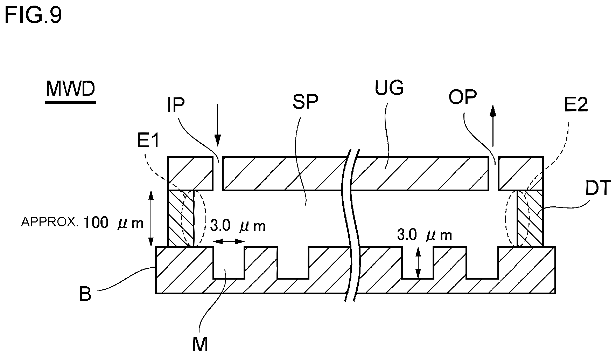

Next, a closed type control system according to a first embodiment is described with reference to FIGS. 4 to 10. The closed type control system (or closed control system) refers to a control system equipped with a microwell device such as being illustrated in FIG. 9 described below, in which a closed space SP is formed by providing an upper glass UG above microwells M.

FIG. 4 is a diagram illustrating a view of an overall configuration of the closed type control system. As illustrated in FIG. 4, the closed type control system 100A includes, by way of example, a fluid system 1, a detection system 3, and a control system 5.

The fluid system 1 includes, for example, a syringe pump 11, a storage tank 14, an oil management part 15, a reagent A management part 16A, a reagent B management part 16B, a reagent C management part 16C, a waste liquid tank A18, and a waste liquid tank B19. The above described components of the fluid system 1 are connected to one anther with tubes CB. At connecting points of the tubes CB, for example, a 3-way electromagnetic valve SV, a pinch valve PV, and a 3-point connector C are provided. For example, at least one of the components of the fluid system 1, the 3-way electromagnetic valve SV, and the pinch valve PV may be controlled by control signals from a PC 51 in the control system 5, or by control signals from a control unit (or a controller) (not illustrated) provided in the fluid system 1.

The syringe pump 11 includes, by way of example, a syringe A12, which delivers, for example, an air to the tube CB, and a syringe B13, which delivers, for example, a wash buffer as a cleaning liquid to the tube CB. The storage tank 14 is a tank that stores, for example, the wash buffer.

The oil management part 15 includes a container for storing an oil, for example. By operating the syringe A12, the oil in the oil management part 15 is delivered to a flow cell 31 through the downstream tubing CB by the air pressure The reagent A management part 16A, the reagent B management part 16B, and the reagent C management part 16C are equipped with containers for storing the reagent A, the reagent B, and the reagent C, respectively. By operating the syringe A12, the reagent A in the reagent A management part 16A, the reagent B in the reagent B management part 16B, and the reagent C in the reagent C management part 16C are delivered to the flow cell 31 via the downstream tubing CB by the air pressure. For example, the reagents A, B, and C may be reagents different from each other, or at least two of the reagents may be a common reagent. In the control system 100A, the types of the reagents are not limited, and the number of the types of the reagents may be two or less, or four or more.

The waste liquid tank A18 is a tank for storing waste liquids generated in the fluid system 1. The waste liquid tank B19 is a tank for storing waste liquids from the flow cell 31.

The detection system 3 includes, for example, the flow cell 31 and a microscope 33. The flow cell 31 is, for example, a measurement container configured to measure a measurement specimen or the like transported through the tubes CB. The flow cell 31 includes, for example, a plurality of microwells. As the flow cell 31, for example, the microwell device that includes the substrate B and the upper glass UG described with reference to FIG. 3 may be used.

The microscope 33 is, for example, a device configured to magnify an object and capture an image of the object. The microscope 33 includes, for example, a microscope and an imaging part to image the object magnified by the microscope. A microscope of the microscope 33 is positioned opposite the microwells, for example, to acquire information from the microwells filled with the first solution or the microwells filled with the second solution.

Examples of the microscope include a stereomicroscope, a fluorescence microscope, a laser scanning microscope, and an optical microscope such as a confocal laser microscope. Examples of the microscope include an electron microscope such as a transmission electron microscope and a scanning electron microscope, an atomic force microscope, a scanning probe microscope such as a scanning tunneling microscope and a scanning near-field light microscope, an X-ray microscope, and an ultrasonic microscope. The imaging part may be located at a location where an observation image of the microscope can be captured, for example, at an eyepiece lens unit, a photographic straight tube, a C-mount, or the like. The imaging part is not particularly limited as long as the imaging part is configured to capture at least one of a still image and a moving image, for example. The imaging part may be, for example, a digital camera, an analog camera, a digital video camera, an analog video camera, or the like.

The control system 5 executes, for example, operation control of the syringe pump 11 and other parts of the fluid system 1. The control system 5 executes, for example, operation control of the microscope 33 in the detection system 3. The control system 5 is equipped with, for example, the PC (Personal Computer) 51. The PC 51 is, for example, a device operated by a user of the control system 100A. The PC 51 includes, for example, a CPU and a memory, and may realize the above mentioned control functions of the PC51 by executing a program stored in the memory. The program to be executed by the CPU may be stored in a storage medium The storage medium storing the program may be a non-transitory computer readable medium (NTM). The non-transitory storage medium is not particularly limited, but may be, for example, a storage medium such as a solid state drive (SSD), a universal serial bus (USB) memory, a compact disc ROM (CD-ROM), or the like. The PC 51 may be equipped with an output device such as a display for displaying detection results of the detection system 3 or the like. The PC 51 may be equipped with an input device such as a keyboard for inputting operation instructions by the user.

<Methods of forming and transporting multi-phase plug>

In the solution replacement method according to an embodiment, for example, for replacing the immiscible liquid with the gas, a multiphas e plug including three phases of the gas, the second solution, and the i mmiscible liquid may be formed in a tube or a pipette tip in advance be fore the gas is introduced (transferred) onto the substrate, and then the multiphase plug may be transferred. In this disclosure, the term "multi phase plug" refers to a collection of fluids in which different types of flu ids are connected without mixing with each other. The types of fluids i n the "multiphase plug" may be two or more types, and may be gas, liq uid, or a combination thereof. It may be preferable that the "multiphase plug" is formed in a channel to maintain its shape.

In particular, it may be preferable to use the multiphase plug when the microwells need to be sealed with the immiscible liquid immediately after the microwells are replaced with the second solution. According to this method, for example, after introducing a surfactant solution (the second solution) into the microwells filled with the bioparticles such as cells or exosomes and fracturing the bioparticles, the microwells can be sealed with the immiscible liquid without a time delay, thereby preventing inclusions of the bioparticles from diffusing to adjacent microwells. In addition, after introducing a substrate solution into the microwells in which enzymes are immobilized, the microwells can be sealed with the immiscible liquid without a time delay, thereby preventing the enzyme reaction products from diffusing to adjacent microwells.

In a case where such a multiphase plug is formed in a tube, the multiphase plug may be formed by injecting the immiscible liquid, the second solution, and the air into the tube in sequence while controlling a fluid controller, such as an electromagnetic valve or the like, for example. Specifically, after the immiscible liquid is injected into the tube, the fluid controller is switched to inject the second solution so as to replace a front part, in the flow direction, of the immiscible liquid with the second solution. Then, the fluid controller is switched to inject gas so as to replace a front part, in the flow direction, of the second solution with the gas. In this way, the three-phase plug may be formed with the air, the second solution, and the immiscible liquid in this order from the front of the flow direction. In a case where a multiphase fluid is formed in a pipette tip, the multiphase fluid may be formed by, for example, aspirating an immiscible liquid, a second liquid, and an air from a distal end of the pipette tip in this order.

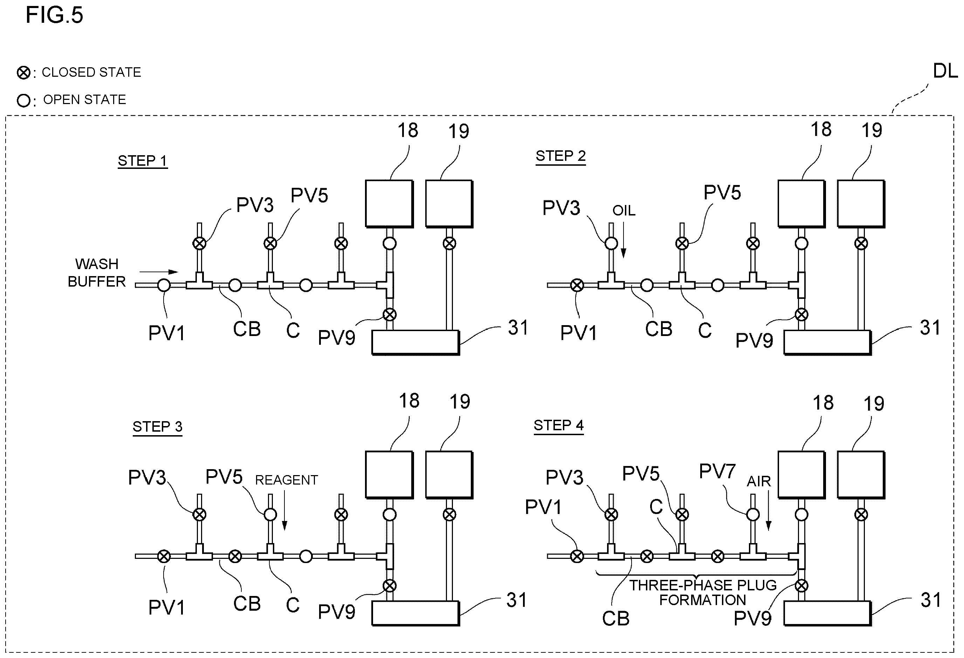

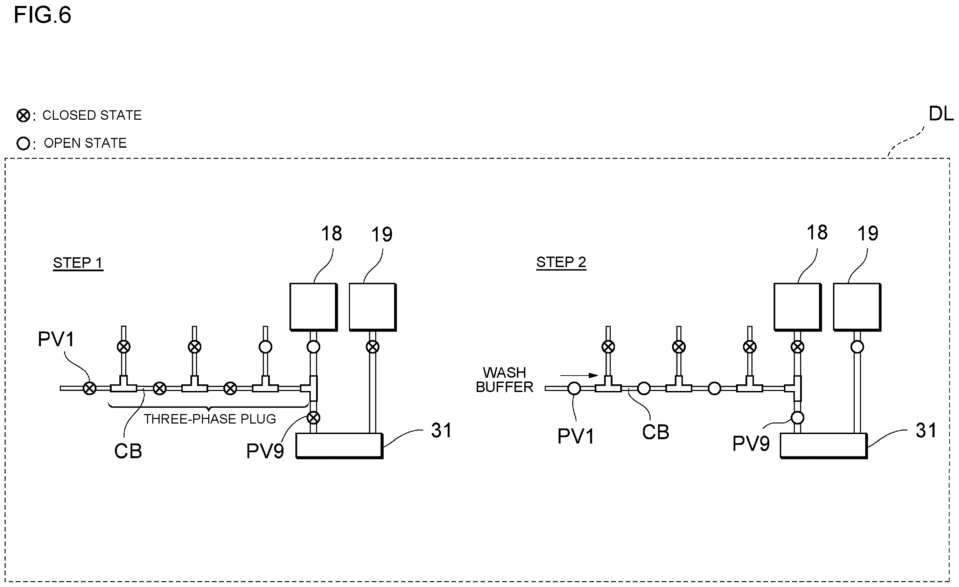

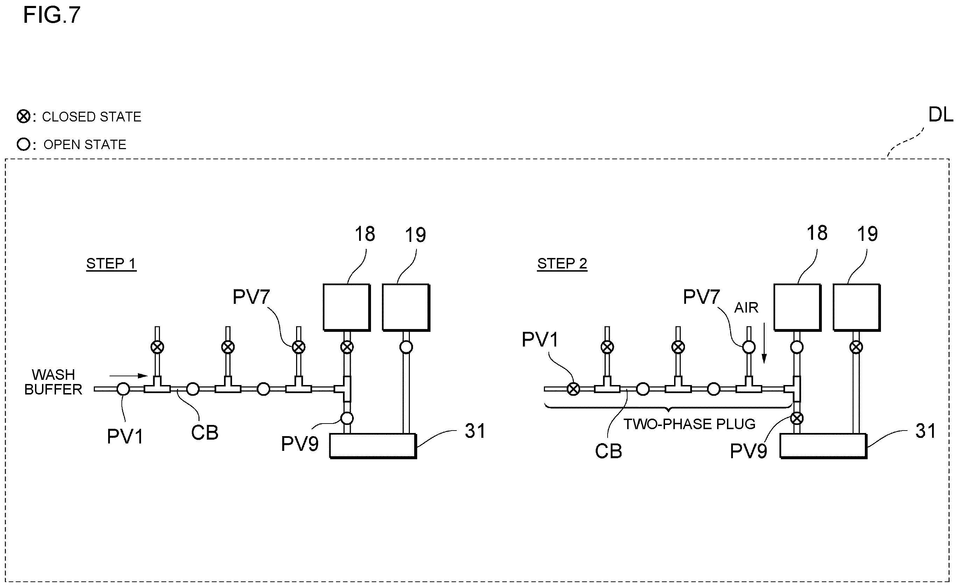

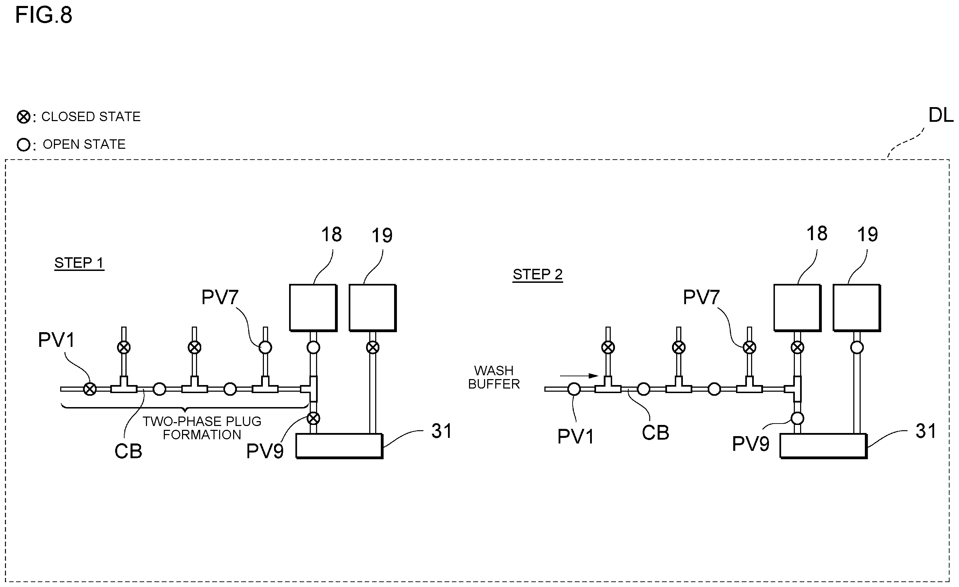

Referring to FIGS. 5 to 8, methods of forming and adding a three-phase plug and a two-phase plug are described in detail. FIG. 5 is a diagram illustrating a schematic view of an overview of a method for forming a three-phase plug. FIG. 6 is a diagram illustrating a schematic view of an overview of a method of transferring a three-phase plug into a flow cell. FIG. 7 is a diagram illustrating a schematic view of an overview of a method for forming a two-phase plug. FIG. 8 is a diagram illustrating a schematic view of an overview of a method of transferring a two-phase plug into a flow cell. FIGS. 5 to 8 are enlarged views of a portion enclosed by the dashed line DL in FIG. 4. In FIGS. 5 to 8, the pinch valve that is marked with an "x" indicates that the pinch valve is in a closed state, and the pinch valve that is not marked with an "x" indicates that the pinch valve is in an open state.

Methods of forming and transporting the three-phase plug are described with reference to FIGS. 5 and 6 below. As illustrated in FIG. 5, in the fluid system 1, the pinch valve PV1 is switched to the open state so that the wash buffer is transferred into the tube CB. As a result, the inside of the tube CB is washed (Step 1). In the fluid system 1, the pinch valve PV1 is switched to the closed state and the pinch valve PV3 is switched to the open state, and then the oil is introduced into the tube CB (Step 2). In the fluid system 1, after the pinch valve PV3 is switched to the closed state and the pinch valve PV5 is switched to the open state, the reagent (solution) is introduced into the tube CB (Step 3). In the fluid system 1, after the pinch valve PV5 is switched to the closed state and the pinch valve PV7 is switched to the open state, an air is introduced into the tube CB (Step 4). Through these steps, as illustrated in FIG. 5, the three-phase plug is formed in the tube CB between pinch valve PV1 and the pinch valve PV9, with the air, the reagent, and the oil being arranged in this order from the front in the flow direction. The above described three-phase plug is only an example, and other fluids may be used to form a three-phase plug. The order in which fluids are introduced to form a three-phase plug is also arbitrary.

As illustrated in FIG. 6, in the fluid system 1, from the state in which the three-phase plug is formed in Step 4 of FIG. 5 (Step 1 in FIG. 6), the pinch valve PV9 is switched to the open state and the pinch valve PV1 is switched to the open state, and then the syringe B13 is activated to push the three-phase plug out of the tube CB, so as to transfer the three-phase plug to the flow cell 31 (Step 2 in FIG. 6). By executing Step 2 in FIG. 6 from the state in which the three-phase plug is formed, the solution replacement in Step 2 to Step 4 described in FIG. 3 can be executed without stopping the flow of liquid.

Methods of forming and transporting the two-phase plug are described with reference to FIGS. 7 and 8 below. As illustrated in FIG. 7, in the fluid system 1, the pinch valve PV1 is switched to the open state so that the wash buffer is transferred into the tube CB (Step 1). As a result, the inside of the tube CB is washed. In the fluid system 1, the pinch valve PV1 is switched to the closed state and the pinch valve PV7 is switched to the open state, and then the air is introduced into the tube CB (Step 2). In this way, as illustrated in FIG. 7, the two-phase plug is formed in the tube CB between the pinch valve PV1 and the pinch valve PV9, with the air and the wash buffer arranged in this order from the front in the flow direction. The above described two-phase plug is only an example, and other fluids may be used to form a two-phase plug. The order in which fluids are introduced to form a two-phase plug is also arbitrary.

As illustrated in FIG. 8, in the fluid system 1, from the state where the two-phase plug is formed in Step 2 of FIG. 7 (Step 1 in FIG. 8), the pinch valve PV9 is switched to the open state and the pinch valve PV1 is switched to the open state, and then the syringe B13 is activated to push the two-phase plug out of the tube CB so as to transfer the two-phase plug to the flow cell 31 (Step 2 in FIG. 8).

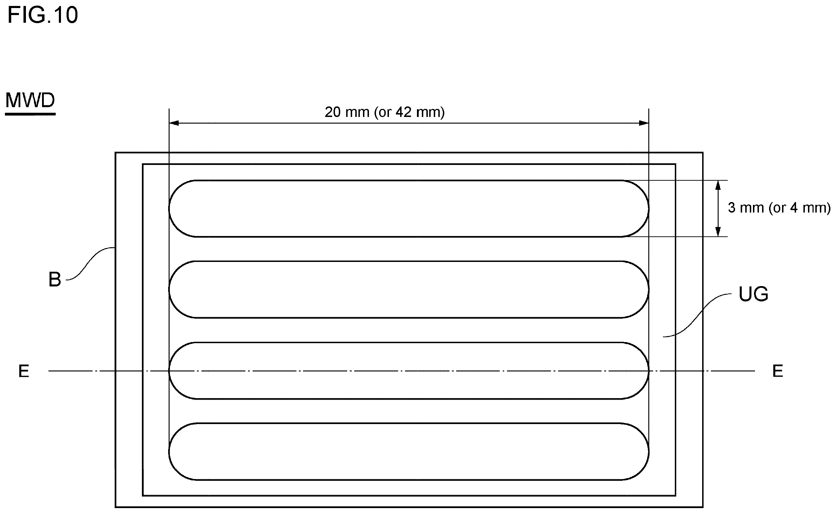

Next, with reference to FIGS. 9 and 10, an example of the microwell device (an example of the flow cell 31 illustrated in FIG. 4) in the closed type control system 100A is described. FIG. 9 is a diagram illustrating an example of a cross-sectional view of a closed type microwell device. FIG. 10 is a diagram illustrating an example of a top view of the closed type microwell device. FIG. 9 illustrates the cross-sectional view taken along the line E-E illustrated in the top view of FIG. 10.

As illustrated in FIG. 9 and FIG. 10, a microwell device MWD according to an embodiment includes, for example, an upper glass UG placed on a double-sided tape DT affixed on a substrate B. For optical assays, it may be preferable that the substrate B is formed of a transparent material. The upper glass UG includes an inlet port IP in the vicinity of one end E1 of a space SP between the substrate B and the upper grass UG and an outlet port OP in the vicinity of the other end E2 of the space SP. For example, when replacing an oil (immiscible liquid) with a gas, the gas may be introduced into the space SP from the inlet port IP provided near the one end E1 of the space SP, and the oil may be discharged from the outlet port OP provided near the other end E2 of the space SP. The inlet port IP may introduce, into the space SP, liquids other than the gas, such as an oil, a reagent, or the like. The outlet port OP may also discharge from the space SP gases and liquids other than the oil, such as a reagent or the like.

Microwells M are arranged on the substrate B with a pitch (an interval) of 12 $\mu$m, for example. A shape of the microwell is arbitrary, but for optical assays, it may be preferable that a bottom surface of the microwell is flat. A width of the microwell (for example, when the bottom surface of the microwell is circular, this indicates the diameter) is not particularly limited, but is preferably 100 μm or less, more preferably 10 μm or less, and even more preferably 5.0 μm or less.

A depth of the microwell is not particularly limited, but is preferably less than 100 μm, more preferably less than 10 μm, and even more preferably less than 5.0 μm. The number of the microwells M included in the microwell device MWD is arbitrary, but may be $10^3$ or more, preferably $10^4$ or more, and more preferably $10^5$ or more from a viewpoint of highly sensitive detection of the substance to be tested when a digital assay is performed using the microwells M. A thickness of the double-sided tape DT is arbitrary as long as the tape DT is thick enough for the connection between the upper glass UG and the substrate B, but is preferably, approximately 100 μm, for example.

<Solution>

The "solution" (reagent) used in an embodiment is not particularly limited as long as it is a solution that is not miscible with the oil. Examples of a "solvent" in the solution include water, hydrophilic alcohol, hydrophilic ether, ketone, nitrile solvent, carboxylic acid, amine solvent, dimethyl sulfoxide, and the like. Specifically, examples of the hydrophilic alcohol include methanol, ethanol, propanol, glycerin, etc. Examples of the hydrophilic ether include tetrahydrofuran, polyethylene oxide, etc. Examples of the ketone include acetone, methyl ethyl ketone, etc. Examples of the nitrile solvent include acetonitrile, etc. Examples of the carboxylic acid include formic acid, acetic acid, butyric acid, propionic acid, etc. Examples of the amine solvent include N, N-dimethylformamide, 2-aminoethanol, 2,2',2"-nitrilotriethanol, 2,2'-Iminodiethanol, etc. Among these, water may be preferred because it does not inhibit chemical reactions with bioparticles, cell cultures, or the like in the microwells.

Examples of "solute" in the solution include protein, nucleic acid, bioactive substance, inorganic salt, surfactant, fluorescent substance, low molecular weight compound, buffer substance, etc. Specifically, examples of the protein include BSA, casein, antigen, antibody, alkaline phosphatase, b-galactosidase, horseradish peroxidase, and streptavidin, etc. Examples of the nucleic acid include DNA, RNA, aptamer, etc. Examples of the bioactive substance include cell growth factor, differentiation inducing factor, cell adhesion factor, cytokine, hormone, sugar chain, lipid, etc. Examples of the inorganic salt include $Na_3PO_4$, $Na_2HPO_4$, $NaH_2PO_4$, NaCl, KCl, $MgCl_2$, $ZnCl_2$, etc.

Examples of the surfactants include Tween (registered trademark) series, Triton (registered trademark) X-100, SDS, Lipidure (registered trademark) series, etc. Examples of the fluorescent substance include Fluorescein, Rhodamine, Texas Red, Tetramethylrhodamine, Carboxyrhodamine, Fecoerythrin, Cy (registered trademark) 3, Cy (registered trademark) 5, Alexa Fluor (registered trademark) series, FDP, FDG, Amplex red (registered trademark), Amplex Ultrared (registered trademark), etc. Examples of the low molecular weight compound include biotin, etc.

Note that in a case where the chemical reaction such as an antigen-antibody reaction, an enzyme-substrate reaction, or the like is performed in the microwells, a solution containing antigens, antibodies, enzymes, or fluorescent substances may be used, for example. In a case where cells is cultured in the microwells, a cell culture medium such as DMEM or the like may be used as a solution.

<Immiscible Liquid>

The immiscible liquid used in an embodiment is a liquid that is immiscible with the solution described above. Examples of the immiscible liquid include saturated hydrocarbon, unsaturated hydrocarbon, aromatic hydrocarbon, silicone oil, perfluorocarbon, and oil such as halogenated solvent. The volatile oil, for example, may be preferred for the immiscible liquid. The volatile oil is easily displaced by gas, which ensures that the oil sealing the microwells is removed from the substrate, allowing the solution to accurately fill the microwells.

Examples of the saturated hydrocarbon include alkane, cycloalkane, and the like. Examples of the alkane include hexane, decane, and the like. Examples of the unsaturated hydrocarbon include squalene, and the like. Examples of the aromatic hydrocarbon includes benzene, toluene, and the like. Examples of the perfluorocarbon include Fluorinert ™ FC-72 (3M), Fluorinert ™ FC-40 (3M), Fluorinert ™ FC-43 (3M), and the like Examples of the halogenated solvent include chloroform, methylene chloride, chlorobenzene, Asahikurin AE-3000 (AGC), Asahikurin AE-3100 (AGC), Asahikurin AC-6000 (AGC), Asahikurin AC-2000 (AGC), Novec ™ 7000 (3M), Novec ™ 7100 (3M), Novec ™ 7200 (3M), Novec ™ 7300 (3M), HFE-7500 (3M), and the like. Among these, AE-3100 and Novec-7100 may be particularly preferred because they have a relatively high vapor pressure.

The volatility of oil may be expressed in terms of vapor pressure thereof, and may be preferable that the oil has a vapor pressure of 0.15 kPa or higher at 25°C (degrees Celsius), for example. The vapor pressure of oil is the pressure of gas when it is in a state of vapor-liquid equilibrium with that substance at that temperature. The vapor pressure at 25°C may be determined by placing the oil in a vacuum vessel, maintaining the temperature at 25°C, and measuring the pressure of the gas when it is in vapor-liquid equilibrium state.

<Second embodiment>

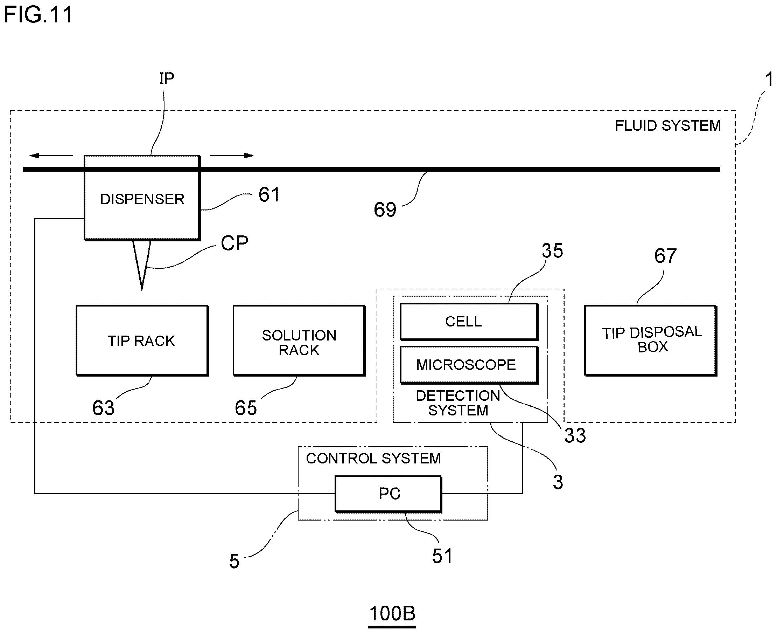

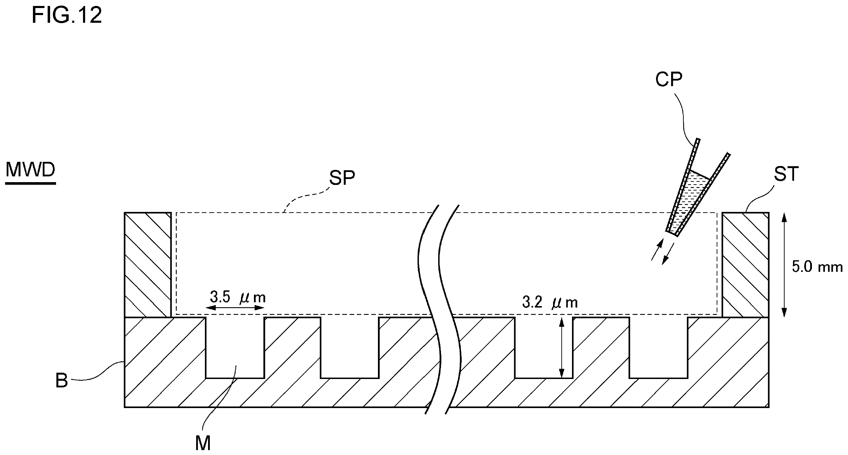

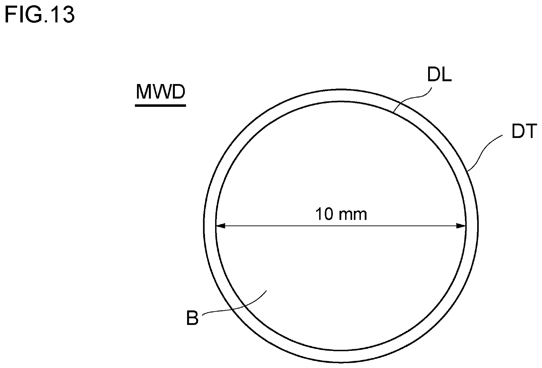

With reference to FIGS. 11 to 13, an open type control system according to a second embodiment is described below. FIG. 11 is a diagram illustrating a view of an overall configuration of an open type control system according to a second embodiment. FIG. 12 is a diagram illustrating an example of a cross-sectional view of an open type microwell device (an example of the cell 35 illustrated in FIG. 11). FIG. 13 is a diagram illustrating an example of a top view of the open type microwell device The open type control system refers to a control system equipped with a microwell device such as being illustrated in FIGS. 12 and 13, for example, a microwell device in which an upper side of the microwells M is open. The following particularly describes points that differ from a first embodiment.

As illustrated in FIG. 11, the fluid system 1 in the control system 100B includes, by way of example, a dispenser 61, a tip rack 63, a solution rack 65, and a tip disposal box 67.

The dispenser 61 takes out one or more pipette tips CP (hereinafter may be referred to as "tips CP") for dispensing a solution or the like from the tip rack 63 and moves the one or more tips CP containing the solution and the like to a position above the cell 35. As illustrated in FIG. 12, the dispenser 61 may use the one or more tips CP containing the solution or the like, to introduce the solution or the like into the microwells M in the cell 35 through a space SP that does not exceed a thickness of a single-sided tape ST from a top surface of a substrate B, for example. The dispenser 61 may use one or more tips CP (empty tips) that are not contains the solution or the like, to aspirate the solution or the like in the space SP and the microwells M in the cells 35 and discharge the aspirated solution. The dispenser 61 is mechanically connected to a movable lane 69 and is thus movable on the movable lane 69.

The solution rack 65 is a rack for managing one or more solutions. The solution rack 65 is loaded with containers that contain solutions (reagents), oils, and the like to be introduced into the cell 35. For example, the dispenser 61 with one or more empty tips CP aspirates the solutions, the oils, and/or the like from the containers placed on the solution rack 65. The tip disposal box 67 is a box in which used tips CP is to be disposed.

As illustrated in FIG. 12 and FIG. 13, the microwell device MWD includes, for example, the single-sided tape ST on the substrate B. The microwells M are arranged on the substrate B with a pitch (interval) of 7.0 $\mu$m, for example. A shape of the microwell is arbitrary, but for optical assays, it may be preferable that a bottom surface of the microwell is flat. A width of the microwell (for example, when the bottom surface of the microwell is circular, this indicates the diameter) is not particularly limited, but is preferably 100 $\mu$m or less, more preferably 10 $\mu$m or less, and even more preferably 5.0 $\mu$m or less.

A depth of the microwell is not particularly limited, but is preferably less than 100 $\mu$m, more preferably less than 10 $\mu$m, and even more preferably less than 5.0 $\mu$m. The number of the microwells M included in the solid line DL of the microwell device MWD is arbitrary, but may be $10^3$ or more, preferably $10^4$ or more, and more preferably $10^5$ or more from a viewpoint of highly sensitive detection of the substance to be tested when a digital detection is performed using the microwells M. A thickness of the single-sided tape ST is arbitrary, but preferably, for example, approximately 5 mm.

<Method of producing a closed type microwell device>

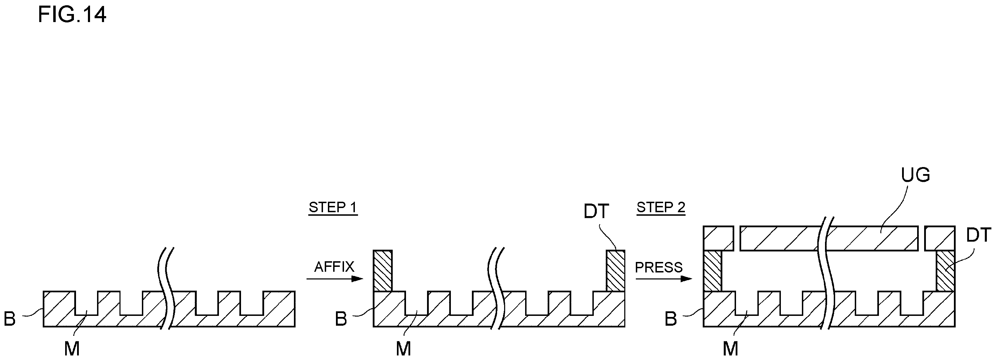

FIG. 14 is a diagram illustrating a schematic view of an overview of a first example of a method of producing a closed type microwell device. In the first example of the method of producing the microwell device, antibodies or enzymes are not immobilized in microwells M. As illustrated in FIG. 14, a double-sided tape DT that has been punched out to a predetermined size is attached to a substrate B (Step 1). Next, an upper glass UG is pressed against and attached to the double-sided tape DT so as to produce the microwell device (Step 2). The produced microwell device may then be injected with a wash buffer, for example.

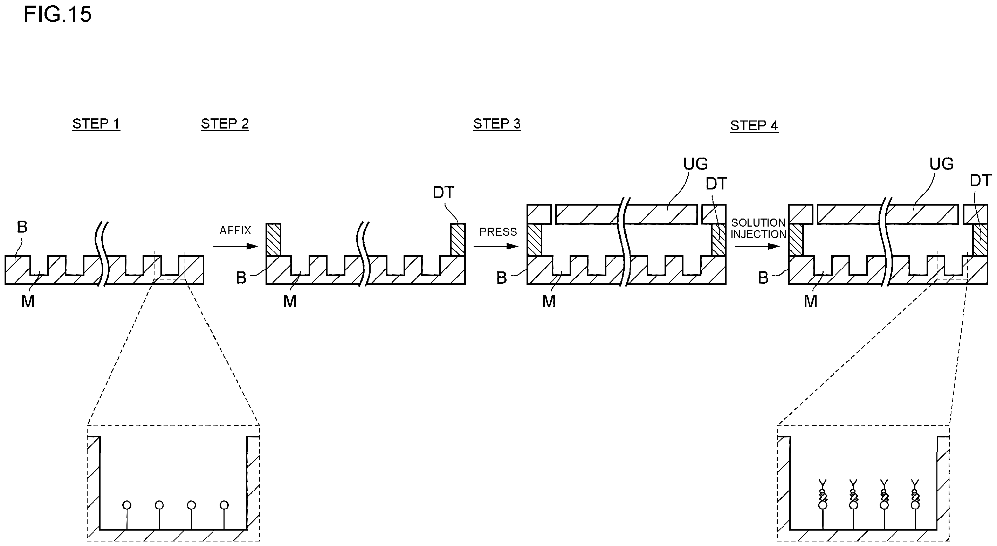

FIG. 15 is a diagram illustrating a schematic view of an outline of a second example of a method of producing a closed type microwell device. In the second example of the method of producing the closed type microwell device, antibodies or enzymes are immobilized in microwells M.

In the following, an example of modifying the microwells M with biotin-conjugated PEG linkers is described with reference to sub-steps (1) to (10) of Step 1. (1) A substrate B on which the microwells M are formed is placed in an ozone irradiation device and irradiated with ozone for, for example, 20 seconds. (2) After (1), the substrate B is immersed in, for example, ethanol and ultrasonically cleaned for, for example, 5 minutes. (3) In a glass cup, for example, (3-Mercaptopropyl)-trimethoxysilane is added dropwise to 150 mL of a reaction solution (2.5% acetic acid/90% ethanol) so that the final concentration is 2 w/v%, and the mixture in the glass cup is stirred at 650 rpm for 5 minutes. (4) The substrate B obtained by (2) is immersed in the glass cup obtained by (3) and left to stand at the room temperature for, for example, 12 hours or more. (5) After (4), the substrate B is washed with ultrapure water and dried with a blower. (6) After (5), the substrate B is placed in a thermostatic dryer (set temperature: for example, 90 °C) and left to stand for 30 minutes. (7) After (6), the substrate B is taken out of the thermostatic dryer and returned to the room temperature. (8) A 1 mM biotin-conjugated PEG reagent/25 mM MES solution is prepared. (9) After (7), for example, 400 $\mu$L of the biotin-conjugated PEG solution of (8) is added to the substrate B, which is then degassed for 5 minutes in a degasser and left to stand at the room temperature for 1 hour. (10) After (9), the substrate B is washed with ultra-pure water and dried with a blower.

To the substrate B that is obtained by the above described Step 1, a double-sided tape DT that has been punched to a predetermined size is attached (Step 2). Next, an upper glass UG is pressed against and attached to the double-sided tape DT so as to produce the microwell device (Step 3). Thereafter, a solution containing, for example, avidins, a target biotinylated antibodies, target enzymes, etc. are injected into the microwell device (Step 4). The biotinylated antibodies include, for example, at least one of anti-PSA monoclonal antibodies and anti-Tau monoclonal antibodies.

<Overview of each example>

Each example is described below. The following is a summary of each Example.

| Example | | Solution replacement | Microwell |
|---|---|---|---|
| Example 1, Comparative Example | With or without air replacement | Dye solution →Cleaning liquid | Closed type (Antibody fixed) |
| Example 2 | Oil vapor pressure | Dye solution →Cleaning liquid | Closed type (Antibody fixed) |
| Example 3 | Applying to open type microwell device | Dye solution →Cleaning liquid | Open type |
| Example 4 | Continuous replacement | Dye (1) solution → Dye (2) solution → Dye (1) solution → ... | Closed type (Antibody fixed, Automatic control) |
| Example 5 | Replacement of three types of solutions | Dye (1) solution → Cleaning liquid → Dye (2) solution | Closed type (Antibody fixed, Automatic control) |
| Example 6 | Enzymatic reaction in well with different enzymes | Substrate (1) solution → Cleaning liquid → Substrate (2) solution → ... | Closed type (Two enzymes fixed, Automatic control) |
| Example 7 | Detecting single particle and quantifying particle inclusions | Substrate (1) solution → Cleaning liquid → Antibody solution → Substrate (2) solution | Closed type (Antibody fixed, Automatic control) |

<Microwell device of Examples 1, 2, 4, and 5>

Here, a method of producing a closed type microwell device used in Examples 1, 2, 4, and 5 is described in detail below. In this producing method, PSA antibodies are bound to biotin-conjugated PEG linkers modified on microwells of a microwell device.

(1) First, the microwell device that is obtained by Step 3 in FIG. 15, that is, the microwell device modified with the biotin-conjugated PEG linkers, is prepared. (2) A 0.001 mg/mL neutravidin/Tris solution is prepared. The composition of the Tris solution includes Tris-HCl: 0.1 M, NaCl: 150 mM, MgCl2: 1 mM, ZnCl2: 0.1 mM, goat IgG: 1 mg/mL, mouse IgG: 1 mg/mL, BSA: 1% (w/v), casein: 0.5% (w/v), blocking reagent: 30 $\mu$g/mL, and NaN3: 0.1% (w/v).

(3) To 510 $\mu$L of the neutravidin/Tris solution obtained by (2), 1 $\mu$L of a 1 mg/mL biotinylated antibody solution is added and the mixture is stirred at the room temperature for 10 minutes. The antibodies includes anti-PSA monoclonal antibodies (Product No. A45170) manufactured by Biospecifics. For biotinylation, Biotin Labeling Kit SH (Product No. LK10) manufactured by DOJINDO is used.

(4) 200 $\mu$L of HISCL Washing Solution (Sysmex) injected into the microwell device obtained by (1). (5) 100 $\mu$L of the solution obtained by (3) is injected into the microwell device obtained by (4) and left to stand at the room temperature for 30 minutes. (6) 200 $\mu$L of HISCL Washing Solution is injected into the microwell device obtained by (5).

<Microwell device of Example 7>

Next, a method of producing a closed type microwell device used in Example 7 is described in detail. In this producing method, Tau antibodies are bound to biotin-conjugated PEG linkers modified onto a microwell device.

(1) First, the microwell device that is obtained by Step 3 in FIG. 15, that is, the microwell device modified with the biotin-conjugated PEG linkers, is prepared.(2) 0.001 mg/mL neutravidin (31000, ThermoFisher) is added to the Tris solution so that a final concentration thereof is 0.001 mg/mL.(3) To the neutravidin/Tris solution obtained by (2), the biotinylated anti-Tau antibody solution is added so that a final concentration thereof is 0.002 mg/mL, and the mixture is stirred at the room temperature for 10 minutes. The antibodies includes anti-Tau monoclonal antibodies (Product No. 806501) manufactured by BioLegend. For biotinylation, Biotin Labeling Kit SH (Product No. LK10) manufactured by DOJINDO is used.

(4) 200 μL of HISCL Washing Solution (Sysmex) is injected into the microwell device obtained by (1). (5) 100 μL of the solution obtained by (3) is injected into the microwell device obtained by (4) and left to stand at the room temperature for 30 minutes.(6) 500 μL of HISCL Washing Solution injected into the microwell device obtained by (5).

<Microwell device of Example 6>

Next, a method of producing a closed type microwell device used in Example 6 is described in detail. In this producing method, enzymes are attached to biotin-conjugated PEG linkers modified onto a microwell device.
(1) First, the microwell device that is obtained by Step 3 in FIG. 15, that is, the microwell device modified with the biotin-conjugated PEG linkers, is prepared.(2) 12.0 pM of a streptavidin-labeled β-Gal (S3887-.5MG, Sigma Aldrich)/PBS solution is prepared.(3) ALP reaction solution (pH = 9.25) is prepared with the following composition. The composition of the solution includes: 1.0 M 2,2'-iminodiethanol (11920-65, Nacalai Tesque), 1.0 mM $MgCl_2$ (133-00161, Wako), and 0.10% (v/v) Tween 20 (T2530, Tokyo Chemical Industry).
(4) 2.8 pM of a streptavidin-labeled ALP (11089161001, Roche)/ALP reaction solution is prepared.(5) 100 μL of the streptavidin-labeled β-Gal/PBS solution prepared by (2) is added to 100 μL of the streptavidin-labeled ALP/ALP reaction solution prepared by (4).(6) 200 μL of HISCL Washing Solution (Sysmex) is injected into the microwell device prepared by (1). (7) To the microwell device prepared by (6), 150 μL of the mixed solution obtained by (5) is injected and immediately thereafter 400 μL of HISCL Washing Solution is injected.
Before going into a detailed description of each Example, reagents and samples used in the Examples, and imaging methods using a fluorescent microscope used in experiments are described below.

<Reagents>

The reagents include: 1. an enzyme solution, 2. an antibody solution, 3. an enzyme substrate solution, 4. a fluorescent dye solution, and 5. a washing solution.

(1. Enzyme solution) An example of the enzyme solution includes an ALP solution. (1) An ALP reaction solution (pH = 9.25) is prepared with the following composition. The composition of the solution includes: 1.0 M 2,2'-iminodiethanol (11920-65, Nacalai Tesque), 1.0 mM $MgCl_2$ (133-00161, Wako), and 0.10% (v/v) Tween 20 (T2530, Tokyo Chemical Industry).(2) An ALP solution of 2.8 pM is prepared by using the ALP reaction solution prepared by (1) and streptavidin-labeled ALP (11089161001, Roche).
(2. Antibody solution) An example of the antibody solution includes an ALP-labeled anti-Tau antibody solution. The ALP-labeled anti-Tau antibody solution is used in Example 7. 0.25 nM of an ALP-labeled anti-Tau antibody/Tris solution is prepared. The antibodies include anti-Tau monoclonal antibodies (Product No. 806501) manufactured by BioLegend. For biotinylation, ALP Labeling Kit SH (Product No. LK13) manufactured by DOJINDO is used.
(3. Enzyme substrate solution) Examples of the enzyme substrate solution include (1) an ALP fluorescent substrate solution used in Example 6, (2) an ALP fluorescent substrate solution (containing dye) used in Example 7, (3) a β-Gal fluorescent substrate solution used in Example 6, and (4) a β-Gal fluorescent substrate/extract solution (containing dye) used in Example 7.

(1) The ALP fluorescent substrate solution is prepared as a 2.0 mM FDP/ALP reaction solution using the ALP reaction solution (pH = 9.25) described in "1. Enzyme solution" and a 50 mM FDP (11600, AAT Bioquest) aqueous solution.(2) The ALP fluorescent substrate solution (containing dye) is prepared as a 1.0 mM FDP (11600, AAT Bioquest)/0.02 mM A647/ALP reaction solution using the ALP reaction solution (pH = 9.25) described in "1. Enzyme solution", FDP, and A647.(3) The β-Gal fluorescent substrate solution is prepared as a 250 μM FDG

(F2756-5MG, Sigma Aldrich)/PBS solution.

(4) For β-Gal fluorescent substrate/extract (containing dye), (i) a 2% (v/v) Triton X-100 (A16046, Alfa Aesar)/-sample dilution (CS617657, Sysmex) is first prepared. (ii) A 2% (w/v) BSA/sample diluent is prepared.(iii) The solutions prepared in (i) and (ii) are mixed in equal amounts to prepare an extract solution.(iv) A 0.25 mM FDG (F2756-5MG, Sigma Aldrich)/0.02 mM A647 (A20347, ThermoFisher)/extraction solution is prepared.

(4. Fluorescent dye solution) Examples of the Fluorescent dye solution include (1) a Fluorescein/PBS solution used in Examples 1, 2, and 3, (2) a Fluorescein/HISCL Washing Solution used in Example 5, (3) an A488/extraction solution used in Example 4, (4) an A647/extraction solution used in Examples 4 and 5, and (5) an A647/ALP reaction solution used in Example 5.

(1) A Fluorescein/PBS solution is prepared by adding PBS (P4417-100TAB, Sigma Aldrich) to 20 mM of a fluorescein (F0096, Tokyo Chemical Industry) solution to a final concentration of 0.20 mM. (2) The Fluorescein/HISCL Washing Solution is prepared as follows. (i) A 200 mM aqueous solution of fluorescein (F0096, Tokyo Chemical Industry Co., Ltd.) is prepared. (ii) An aqueous solution of the fluorescein prepared in (i) is diluted with HISCL Washing Solution to a final concentration of 4 mM.
(3) The A488/extraction solution is prepared as follows: (i) A 2% (v/v) Triton X-100 (A16046, Alfa Aesar)/specimen diluent (CS617657, Sysmex) is prepared. (ii) A 2% (w/v) BSA/specimen diluent is prepared. (iii) The solution prepared in (i) and the solution prepared in (ii) are mixed in equal amounts to prepare the extract solution, (iv) 10 μM of an A488 (A10254, ThermoFisher)/extraction solution is prepared.
(4) The A647/extract solution is prepared as follows. The extract solution prepared in (3)(iii) is used to prepare 10 μM of an A647 (A20347, ThermoFisher)/extract solution (extract solution used in Example 4). The extract solution prepared in (3)(iii) is used to prepare 0.3 mM of an A647 (A20347, ThermoFisher)/extract solution (extract solution used in Example 5).(5) The A647/ALP reaction solution is prepared as 0.3 mM of an A647/ALP reaction solution using the above-mentioned ALP reaction solution.

(5. Washing solution) The washing solution is used in Example 1 and the first comparative example. The washing solution (pH = 7.9) is prepared with the following composition. The composition of the washing solution includes: 20 mM Tris-HCl (314-90065, NIPPON GENE); 0.1% Tween 20 (T2530, Tokyo Chemical Industry Co., Ltd.); and 50 mM NaCl (191-01665, Wako).

<Sample>

An immune complex solution containing exosomes, magnetic particles, and β-Gals used in Example 7 is described below. The immune complex solution is prepared as follows. (1) The magnetic particles labeled with anti-CD9 antibodies are dispensed into a tube so that there are approximately 10 million particles per sample, and the particles are washed with HISCL Washing Solution. After washing, the entire HISCL Washing Solution is discarded. The antibodies include anti-CD9 monoclonal antibodies (Product No. 312102) manufactured by BioLegend. The magnetic particles includes magnetic particles manufactured by Thermo Fisher Scientific (Product No. 14311D). (2) 80 μL of a Tris solution is added to the tube prepared by (1). (3) A dilution series of the exosome solution (amount of exosome per sample: 0.128 μg, 3.2 μg, 16 μg, 80 μg) are prepared using PBS (Sigma Aldrich, P4417-100TAB). The exosomes are collected from the supernatant of HCT116 cell line cultured cells by size exclusion chromatography.
(4) 20 μL of each of the exosome solutions prepared by (3) is added to the solution prepared by (2). For exosome-negative samples, 20 μL of the Tris solution is added. (5) The sample prepared by (4) is shaken for 1 hour (1200 rpm, room temperature). (6) The sample prepared by (5) is washed twice with 200 μL of HISCL Washing Solution. After washing, the entire HISCL Washing Solution is discarded. (7) A 0.001 mg/mL biotinylated anti-CD63 antibody/Tris solution is prepared. The antibodies includes anti-CD63 monoclonal antibodies (Product No. 353014) manufactured by BioLegend. For biotinylation, Biotin Labeling Kit SH (Product No. LK10) manufactured by DOJINDO is used. (8) 100 μL of the solution prepared by (7) is added to the tube prepared by (6). (9) The sample prepared by (8) is shaken in a shaker for 30 minutes (1200 rpm, room temperature).
(10) The sample obtained by (9) is washed with 200 μL of HISCL Washing Solution twice. After washing, the entire HISCL Washing Solution is discarded. (11) A 1.2 pM streptavidin-labeled β-Gal (Sigma, product number: S3887-5MG)/Tris solution is prepared. The prepared solution is filtered using a 0.22 μm filter. (12) 100 μL of the solution prepared by (11) is added to the tube prepared by (10). (13) The sample prepared by (12) is shaken with a shaker (1200 rpm, room temperature) for 30 minutes. (14) The sample prepared by (13) is washed with 500 μL of HISCL Washing Solution three times. After washing, the entire HISCL Washing Solution is discarded. (15) 20 μL of the Tris solution is added to the tube prepared by (14).

An average number $\lambda$ of the exosomes per magnetic particle is given by Equation 1 below.

$$\text{(Equation 1)}$$

$$\lambda = N_{exo} / N_{bead}$$

($N_{exo}$: number of exosomes in a sample, and $N_{bead}$: number of magnetic particles in a sample (= 10 million))

$N_{exo}$ is calculated using Equation 2.

$$\text{(Equation 2)}$$

$$N_{exo} = m_{exo} \times n_{exo}$$

($m_{exo}$: mass of exosomes, and $n_{exo}$: number of exosomes per 1 mg of exosomes (= $1.4 \times 10^8$/mg))

<Imaging method>

In the imaging method using the fluorescence microscope in each Example, the following fluorescence microscope and imaging condition are adopted. The fluorescence microscope is equipped with a microscope: IX-83, Olympus, a camera: Zyla 4.2 sCMOS, ANDOR, an objective lens: UCPLFLN20X, Olympus, a light source: X-Cite TURBO, EXCELITAS Technologies, and a fluorescence mirror unit: U-FBNA, Olympus. The imaging condition includes an excitation light intensity: approximately 0.08 mW, an exposure time: 100 ms, and number of fields of view: 60 (size of one field of view: 685.3 mm × 685.3 mm). Next, each Example is described in detail. First, Example 1 is described below.

<Example 1>

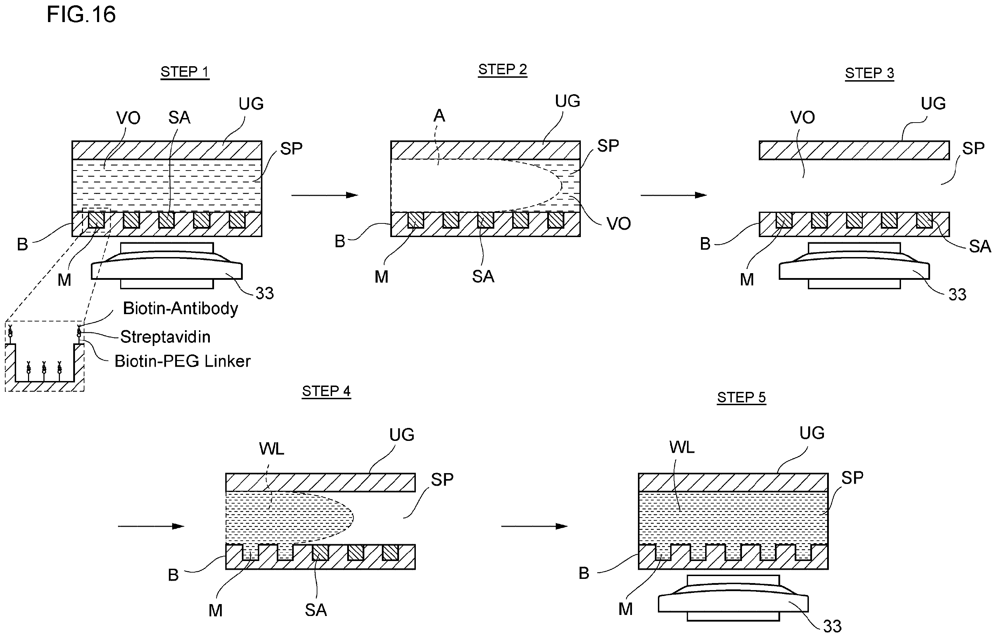

With reference to FIGS. 16 to 18, Example 1 and the comparative example are described below. Regarding removal of the sealing layer (oil layer), in Example 1, the replacement step using the air is followed by the injection of the cleaning liquid, whereas in the first comparative example, the cleaning liquid is injected without the replacement step using the air being performed. Each of Example 1 and the comparative example uses the closed type microwell device to which anti-PSA monoclonal antibodies are immobilized. Although the antibody-immobilized microwell device is used in anticipation of antigen-antibody reactions in the microwells, the reagents do not include antigens. Further, each of Example 1 and the comparative example uses, as reagents, the fluorescein/PBS solution, the cleaning liquid, and the volatile oil (FC-43). FC-43 has a vapor pressure of 0.17 kPa at 25°C and a boiling point of 174°C.

FIG. 16 is a diagram illustrating a schematic view of a flow of Example 1. First, as a precondition for Step 1, 200 μL of the fluorescein/PBS solution is introduced into each microwell M as the solution SA. Next, 200 μL of the oil VO (FC-43) is introduced into the space SP as the sealing layer, and then the microwell device is imaged with the microscope 33 to obtain a fluorescent image A (Step 1). Next, 50 mL of the air A is introduced into the space SP. As a result, the oil VO in the space SP is replaced with the air A (Step 2). After the oil VO in the space SP is replaced with the air A, the microwell device is imaged with the microscope 33 to obtain a fluorescent image B (Step 3).

Next, the cleaning liquid WL (600 μL of HISCL Washing Solution) is introduced into the space SP in which the oil VO has been replaced with the air A. As a result, the solution SA contained in each microwell M is replaced with the cleaning liquid WL (Step 4). After the space SP and each macrowell M are filled with the cleaning liquid WL, the microwell device is imaged with the microscope 33 to obtain a fluorescent image C (Step 5).

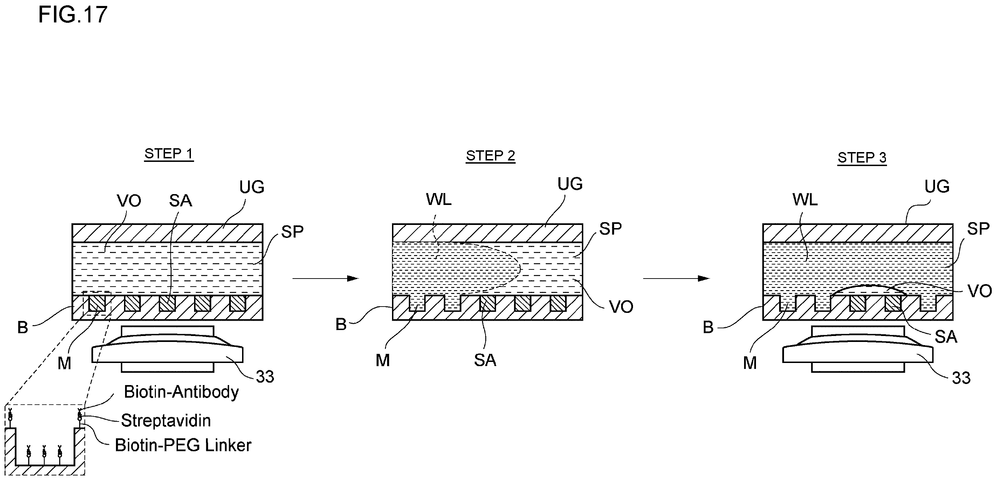

FIG. 17 is a diagram illustrating a schematic view of a flow of the comparative example with respect to Example 1. The comparative example is the same as Example 1 except that the comparative example does not include the step of introducing 50 mL of the air A (Step 2 in FIG. 16) and does not include the subsequent step of acquiring the fluorescent image B (Step 3 in FIG. 16). Specifically, as illustrated in FIG. 17, as a precondition for Step 1, 200 μL of the fluorescein/PBS solution is introduced into each microwell M as the solution SA. Next, 200 μL of the oil VO (FC-43) is introduced into the space SP as the sealing layer, and then the microwell device is imaged with the microscope 33 to obtain a fluorescent image A' (Step 1). Next, the cleaning liquid WL (600 μL of HISCL Washing Solution) is introduced into the space SP, so as to push the oil VO out of the space SP (Step 2). After the space SP is filled with the cleaning liquid WL, the microwell device is imaged by the microscope 33 to obtain a fluorescent image C' (Step 3).

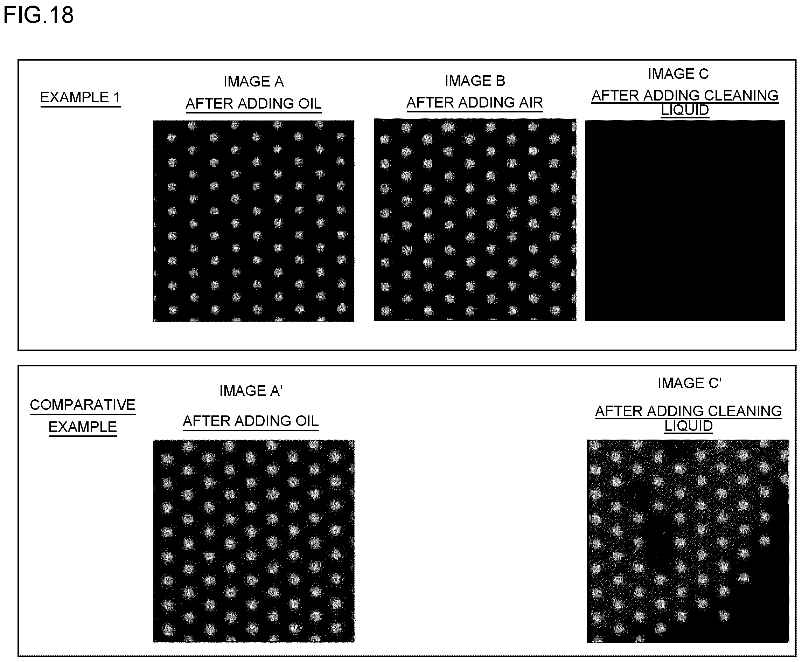

FIG. 18 is a diagram illustrating results of Example 1 and the comparative example. One bright spot in each fluorescent image corresponds to one microwell M. The presence of a bright spot indicates the presence of the solution SA in a microwell M. As illustrated in FIG. 18, in Example 1, according to the fluorescent image C, all the bright spots from the microwells M are disappeared after the addition of the cleaning liquid. This indicates that the solution SA in each microwell M has been replaced with the cleaning liquid WL in Example 1. That is, this indicates it is possible to decrease the number of microwells M in which the solution is not replaced, which enables the solution replacement with a high accuracy. This is thought to be because, when performing the process of introducing the air A into the space SP where the oil VO is present, even if some of the oil VO is not pushed out by the air A and remains in the space SP, the remaining oil VO will vaporize and mix with the air A, and therefore will not hinder the replacement of the solution SA with the cleaning liquid WL in each microwell M. On the other hand, in the comparative example 1, according to the fluorescent image C', many of the bright spots have not disappeared after the addition of the cleaning liquid. In other words, in the comparative example 1, since there is no step of introducing 50 mL of the air A (Step 2 in FIG. 16), the oil VO that seals the microwells M cannot be completely removed by the cleaning liquid WL, and as a result, the solution SA remains in some of the microwells M. This is thought to be because if the step of introducing the air A into the space SP where the oil VO is present is not performed, and some of the oil VO is not pushed out by the air A and remains in the space SP, the remaining oil VO may remain in the space SP as liquid, preventing the replacement of the solution SA with the cleaning liquid WL in the microwells M.

<Example 2>

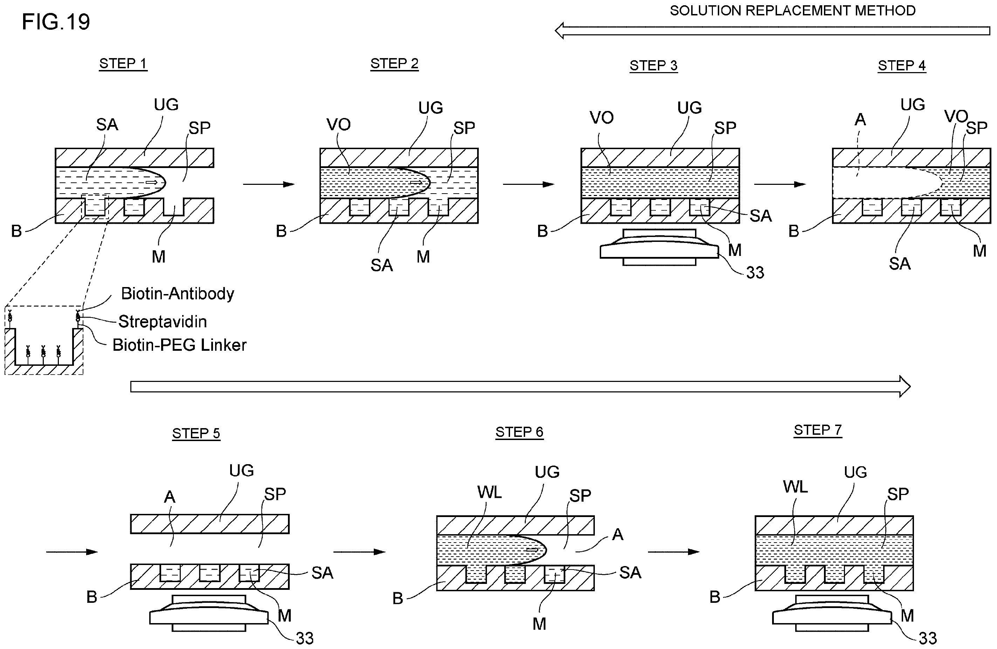

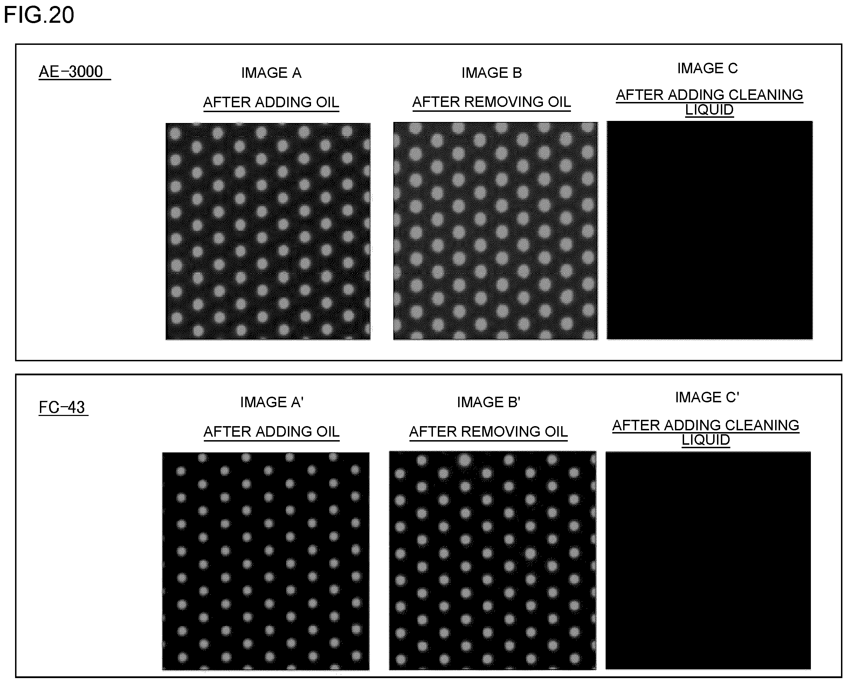

Example 2 is described with reference to FIGS.19 and 20 Example 2 uses the closed type microwell device to which the anti-PSA monoclonal antibodies are immobilized. Although the antibody-immobilized microwell device is used in anticipation of antigen-antibody reactions in the microwells, the reagents do not include antigens. Further, Example 2 uses, as the reagents, the fluorescein/PBS solution, the cleaning liquid, and the volatile oil (AE-3000 and FC-43) are used. AE-3000 has a vapor pressure of 31 kPa at 25°C, an evaporation rate (ratio) of 67 with respect to ethyl ether at 100, and a boiling point of 56°C. FC-43 has a vapor pressure of 0.17 kPa at 25°C and a boiling point of 174°C.

FIG. 19 is a diagram illustrating a schematic view of a flow of Example 2. In Example 2, the following Steps 1 to 7 are carried out in each of cases where AE-3000 is used as the volatile oil and where FC-43 is used as the volatile oil. First, after 100 μL of HISCL Washing Solution is introduced into the space SP as a precondition for Step 1, 200 μL of the fluorescein/PBS solution serving as the solution SA is introduced into the space SP and the microwells M (Step 1). Next, 200 μL of the oil VO (AE-3000) is introduced into the space SP as the sealing layer (Step 2). As a result, the solution SA in the microwell M is sealed with the oil VO. After the solution SA in the microwells M is sealed with the oil VO, the microwell device is imaged with the microscope 33 to obtain a fluorescent image A (Step 3). Next, 50 mL of the air A is introduced into the space SP. As a result, the oil VO in the space SP is replaced with the air A (Step 4).

After the oil VO in the space SP is replaced with the air A, the microwell device is imaged with the microscope 33 to obtain a fluorescent image B (Step 5). The cleaning liquid WL (600 μL of HISCL Washing Solution) is introduced into the space SP in which the oil VO has been replaced with the air A. As a result, the solution SA contained in each microwell M is replaced with the cleaning liquid WL (Step 6). After the space SP and each macrowell M are filled with the cleaning liquid WL, the microwell device is imaged by the microscope 33 to obtain a fluorescent image C (Step 7). Note that in the case where the the oil VO is FC-43, the above described Steps 1 to 7 are carried out using FC-43 as the oil VO instead of AE-3000.

FIG. 20 is a diagram illustrating experimental results of Example 2. Images A, B, and C illustrated in FIG. 20 correspond to the fluorescence image A obtained in Step 3, the fluorescence image B obtained in Step 5, and the fluorescence image C obtained in Step 7 when AE-3000 is used as the volatile oil. Images A', B', and C' illustrated in FIG. 20 correspond to the fluorescence image A obtained in Step 3, the fluorescence image B obtained in Step 5, and the fluorescence image C obtained in Step 7 when FC-43 is used as the volatile oil. As illustrated in the fluorescent images C and C' of FIG. 20, all the bright spots from the microwells M are disappeared by the additions of the air A and the cleaning liquid WL. This indicates that the solution SA in each microwell M has been replaced with the cleaning liquid WL, and it can be seen that either AE-3000, which has the vapor pressure of 31 kPa at 25°C, or FC-43, which has the vapor pressure of 0.17 kPa at 25°C, can be used as the oil VO. In other words, it is understood that an oil having the vapor pressure of 0.15 or more at 25°C can be used as the oil VO.

<Example 3>

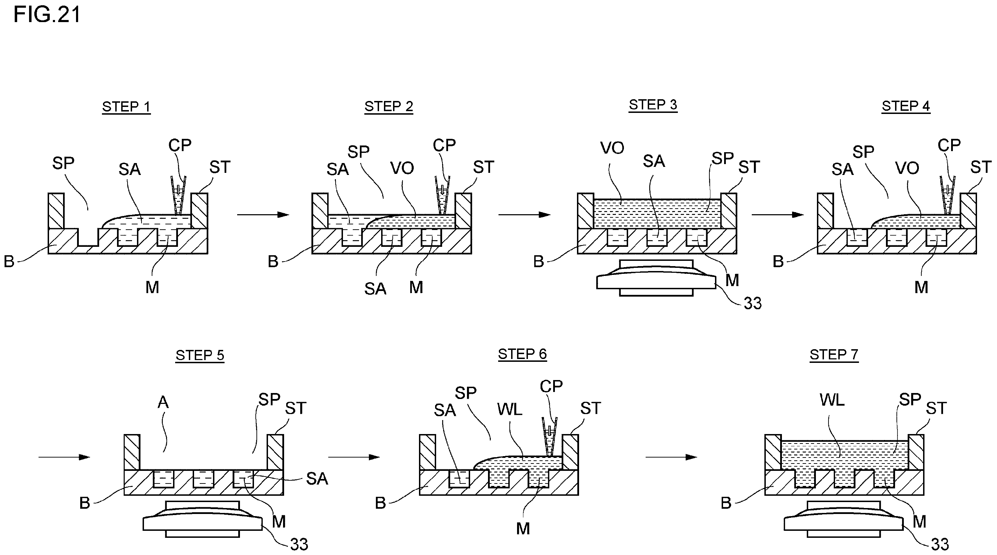

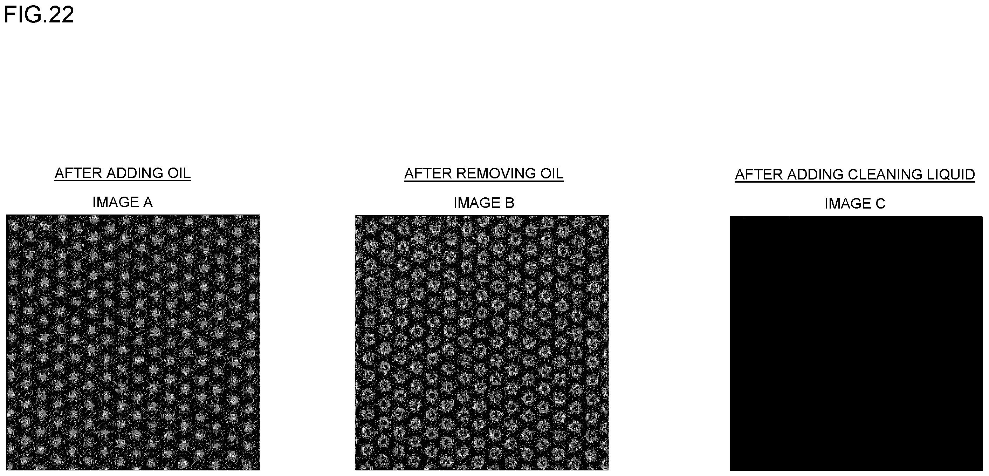

Example 3 is described with reference to FIGS. 21 and 22 Exam ple 3 is implemented based on the open type control system 100B, unli ke other Examples that are implemented based on the closed type contr ol system 100A. Example 3 uses, as a microwell device, the open type microwell device MWD described with reference to FIGS. 12 and 13, a nd uses, as reagents, the fluorescein/PBS solution, the cleaning liquid, a nd the volatile oil (Novec-7100). Novec-7100 has a vapor pressure of 2 8 kPa at 25°C and a boiling point of 61°C.

FIG. 21 is a diagram illustrating a schematic view of a flow of Example 3. First, as a precondition for Step 1, 150 μL of HISCL Washing Solution is introduced into the space SP in a range not exceeding the thickness of the single-sided tape ST from the upper surface of the substrate B as a reference, using the tip CP. Then, the 150 μL HISCL wash solution is removed. Next, using the tip CP, 100 μL of the fluorescein/PBS solution serving as the solution SA is introduced into the space SP, and then 80 μL of the fluorescein/PBS solution is removed from the space SP. This causes the fluorescein/PBS solution to be contained in each microwell M (Step 1). Next, 130 μL of the oil VO (Novec-7100) is introduced into the space SP using the tip CP, so as to seal the solution SA in the microwells M with the oil VO (Step 2). After the solution SA in the microwells M is sealed with the oil VO, the microwell device is imaged with the microscope 33 to obtain a fluorescent image A (Step 3).

Next, using the tip CP, the oil VO is aspirated from the space SP so as to remove the oil VO from the space SP. As a result, the oil VO in the space SP is replaced with the air A (Step 4). After the oil VO in the space SP is replaced with the air A, the microwell device is imaged with the microscope 33 to obtain a fluorescent image B (Step 5). Thereafter, the cleaning liquid WL starts to be introduced through the space SP using the tip CP, so that the solution SA in the microwells M is replaced with the cleaning liquid WL (Step 6). After the above-mentioned solution replacement in the microwells is carried out, the microwell device is imaged by the microscope 33 to obtain a fluorescent image C (Step 7).

FIG. 22 is a diagram illustrating experimental results of Example 3. As illustrated in the fluorescent image C of FIG. 22, all the bright spots from the microwells M have disappeared by removing the oil VO (Novec-7100) and adding the cleaning liquid WL. This indicates that a highly accurate solution replacement is possible even when the open-type microwell device (such as being illustrated in FIGSS. 12 and 13) is used.

<Example 4>

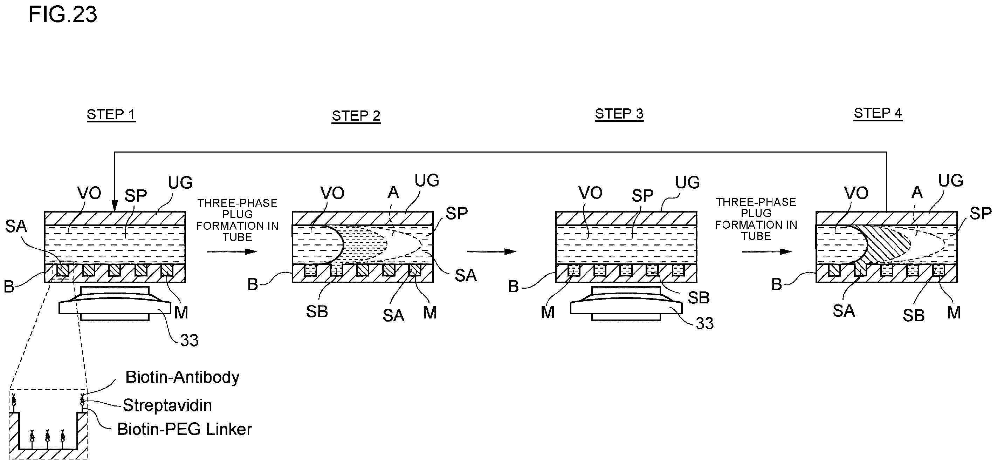

Example 4 is described with reference to FIGS. 23 to 26. Exam ple 4 uses the closed control system 100A illustrated in FIG. 4 to auto matically transfer liquids to the closed type microwell device. In Exampl e 4, the solution replacement (solution exchange) between the A488/extr action solution (first solution) and the A647/extraction solution (second s olution) is performed. In the closed control system 100A illustrated in F IG. 4, the A488/extraction solution is stored in the reagent A manageme nt part 16A, the A647/extraction solution is stored in the reagent B man agement part 16B, and the HISCL Washing Solution is stored in the sto rage tank 14. Example 4 uses the closed type microwell device to whic h the anti-PSA monoclonal antibodies are immobilized. Although the ant ibody-immobilized microwell device is used in anticipation of antigen-anti body reactions in the microwells, the reagents do not include antigens. Further, Example 4 uses, as the reagents, the fluorescein/PBS solution, the cleaning liquid, and the volatile oil (AE-3000).

FIG. 23 is a diagram illustrating a schematic view of a flow of Example 4. First, in the microwell device, the solution SA is filled in each microwell M and sealed with the oil VO, and then the microwell device is imaged with the microscope 33 to obtaine a fluorescent image A (Step 1). Next, a three-phase plug (air A, A647/extraction solution (solution SB), and oil VO arranged from the front in the flow direction) is formed in the tube CB and transferred to the microwell device (flow cell 31). As a result, the oil VO in the space SP is replaced with the air A, the solution SB is introduced into the space SP where the oil VO has been replaced with the air A so that the solution SA in the microwells M is replaced with the solution SB, and then the solution SB is sealed with the oil VO (Step 2). After the solution SB is contained in the microwells M and sealed with the oil VO, the microwell device is imaged by the microscope 33 to obtain a fluorescent image B (Step 3).

Next, the three-phase plug (air, A488/extraction solution (solution SA), and oil VO arranged from the front in the flow direction) is formed in the tube CB and transferred to the microwell device (flow cell 31). As a result, the oil VO in the space SP is replaced with the air A, the solution SA is introduced into the space SP where the oil VO has been replaced with the air A so that the solution SB in the microwells M is replaced with the solution SA, and then the solution SA is sealed with the oil VO (Step 4). Then, returning to Step 1, the solution SB in the microwells M is replaced with the solution SA and sealed with the oil VO, after which the microwell device is imaged by the microscope 33 to obtain a fluorescent image C. Such a cycle of Steps 1 to 4 is repeatedly executed.

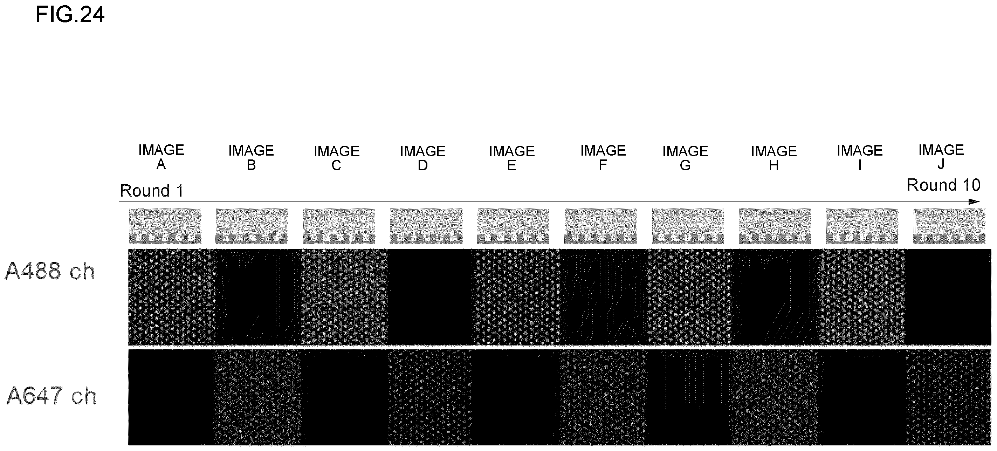

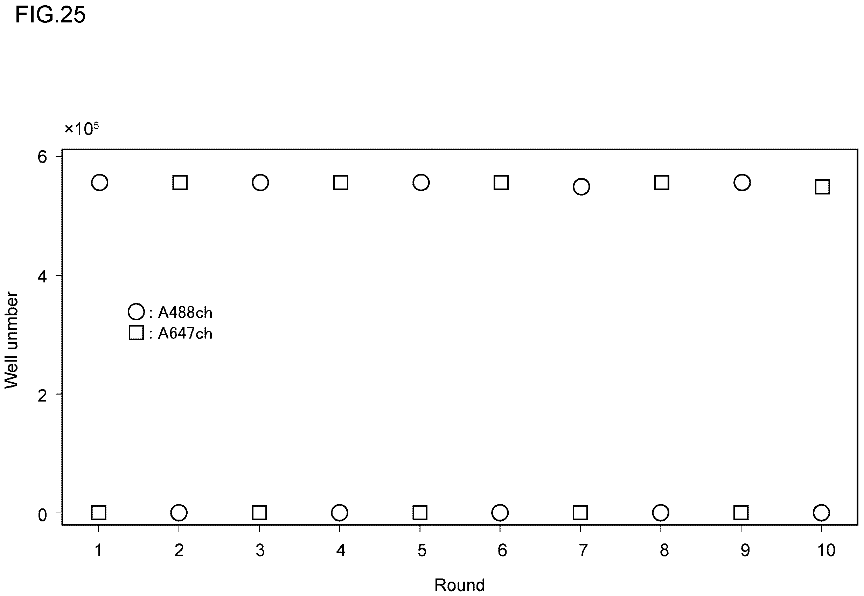

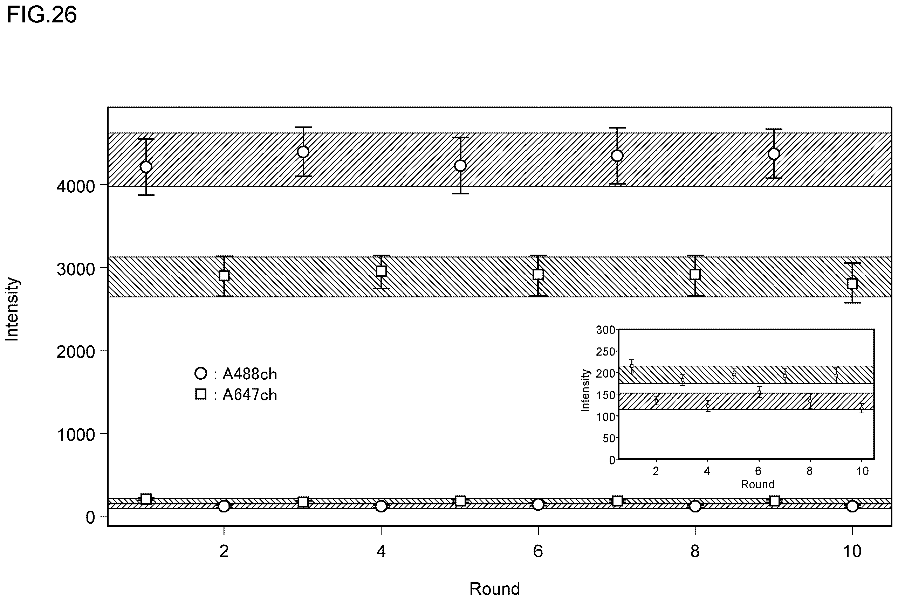

Experimental results of Example 4 are described with reference to FIGS. 24 to 26. FIG. 24 is a diagram illustrating fluorescent images acquired by the microscope. In FIG. 24, A488ch corresponds images captured with filtering to the wavelength of the fluorescence emitted from the solution SA. Each bright spot in each of the captured images corresponds to a microwell M that contains the solution SA. In FIG. 24, A647ch corresponds images captured with filtering to the wavelength of the fluorescence emitted from the solution SB. Each bright spot in each of the captured images corresponds to a microwell M that contains the solution SB. Furthermore, fluorescent images A, C, E, G, and I illustrated in FIG. 24 are the images captured in Step 1, and fluorescent images B, D, F, H, and J illustrated in FIG. 24 are the images captured in Step 4. As illustrated in the fluorescent images A, C, E, G, and I, it can be seen that in Step 1, each microwell M contains the solution SA, but does not contain the solution SB. As illustrated in the fluorescent images B, D, F, H, and J, it can be seen that in Step 4, each microwell M contains the solution SB, but does not contain the solution SA. FIG. 25 is a graph illustrating the number of microwells M in which the bright spots are detected for each of the A488ch fluorescent image and the A647ch fluorescent image. In FIG. 25, the vertical axis indicates the number of microwells M in which the bright spots are detected, and Rounds 1, 3, 5, 7, and 9 on the horizontal axis correspond to the fluorescent images captured in Step 1, and Rounds 2, 4, 6, 8, and 10 correspond to the fluorescent images captured in Step 4. As illustrated in this graph, in Rounds 1, 3, 5, 7, and 9, many bright spots due to fluorescence emitted from the solution SA are detected, whereas no bright spots due to fluorescence emitted from the solution SB are detected. In Rounds 2, 4, 6, 8, and 10, many bright spots due to fluorescence emitted from the solution SB are detected, whereas no bright spots due to fluorescence emitted from the solution SA are detected. Accordingly, it can be seen that in Step 1, each microwell M contains the solution SA but not the solution SB, and in Step 4, each microwell M contains the solution SB but not the solution SA. FIG. 26 is a graph illustrating the fluorescence intensity in the A488ch fluorescence images and the A647ch fluorescence images. The graph in FIG. 26 also illustrates an enlarged graph of the range of the fluorescence intensity from 0 to 300. From these, it can be seen that in Rounds 1, 3, 5, 7, and 9, the fluorescence intensity emitted from the solution SA is strong, and the fluorescence intensity emitted from the solution SB is close to zero. Further, it can be seen that in Rounds 2, 4, 6, 8, and 10, the fluorescence intensity emitted from solution SB is strong, and the fluorescence intensity emitted from solution SA is close to zero. In other words, from the graph of FIG. 26, it can be seen that in Step 1, each microwell M contains the solution SA but not the solution SB, and in Step 4, each microwell M contains the solution SB but not the solution SA. As illustrated in FIGS. 24 to 26, it is indicated that the replacement of the solution SA (A488/extraction solution) and the solution SB (A647/extraction solution) can be continuously performed using the three-phase plug formed in the tube CB.

<Example 5>

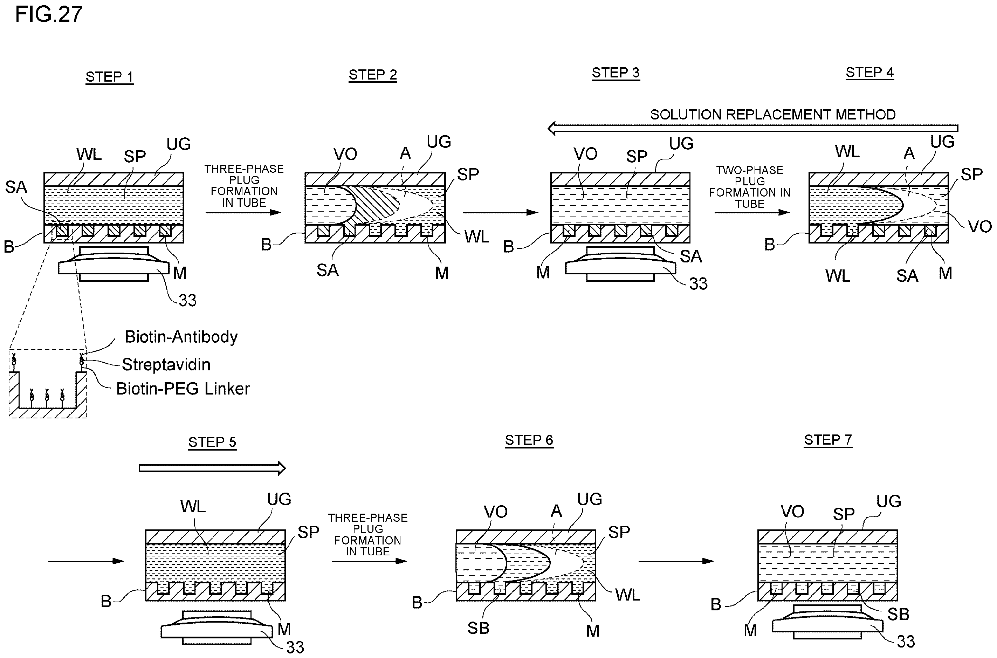

Example 5 is described with reference to FIGS. 27 to 31. In Ex ample 5, the solution replacement using solutions of different types is e xamined. Specifically, in Example 5, the solution replacement is perfor med using a surfactant solution and an organic solvent. In Example 5, the replacement of the different type solutions is executed (first experim ent), and carryover in the solution replacement is examined (second exp eriment).

In the first experiment, the closed type microwell device to which the anti-PSA monoclonal antibody is immobilized is used. Although the antibody-immobilized microwell device is used in anticipation of antigen-antibody reactions in the the microwells, the reagents do not include antigens. In the closed control system 100A illustrated in FIG. 4, the A647/ALP reaction solution is stored in the reagent A management part 16A, the A647/extraction solution is stored in the reagent C management part 16C, and the fluorescein/HISCL Washing Solution is stored in the storage tank 14. The volatile oil used is AE-3000.

FIG. 27 is a diagram illustrating a schematic view of a flow of Example 5. The fluorescein/HISCL Washing Solution WL is introduced into the space SP so that the space SP and each microwell M are filled with the washing solution WL, after which the microwell device is imaged by the microscope 33 to obtain a fluorescent image A (Step 1). As illustrated in FIGS. 5 and 6, the three-phase plug (air A, A647/extraction solution (solution SA), and oil VO arranged from the front in the flow direction) is formed in the tube CB and transferred to the microwell device (flow cell 31). As a result, the cleaning liquid WL in the space SP is replaced with the air A, and the solution SA is introduced into the space SP where the cleaning liquid WL has been replaced with the air A, so that the cleaning liquid WL is replaced with the solution SA in the microwells M, and the solution SA is sealed with the oil VO (Step 2). After the solution SA is accommodated in the microwells M and sealed with the oil VO, the microwell device is imaged by the microscope 33 to obtain a fluorescent image B (Step 3).

Next, such as being illustrated in FIGS. 7 and 8, the two-phase plug (air A, and fluorescein/HISCL Washing Solution WL arranged from the front in the flow direction) is formed in the tube CB, and the two-phase plug is transferred to the microwell device (flow cell 31) and introduced into the space SP. As a result, the oil VO in the space SP is replaced with the air A, and the cleaning liquid WL is introduced into the space SP where the oil VO has been replaced with the air A, replacing the solution SA in each microwell M with the cleaning liquid WL (Step 4). After the cleaning liquid WL is filled in the space SP and the cleaning liquid WL is also accommodated in the microwells M, the microwell device is imaged by the microscope 33 to obtain a fluorescent image C (Step 5). Next, the three-phase plug (air A, A647/ALP reaction solution (solution SB), and oil VO arranged from the front in the flow direction) is formed in the tube CB and transferred to the microwell device (flow cell 31). As a result, the cleaning liquid WL in the space SP is replaced with the air A, and the solution SB is introduced into the space SP where the cleaning liquid WL has been replaced with the air A, replacing the cleaning liquid WL with the solution SB in the microwells M, and the solution SB is sealed with the oil VO (Step 6). After the solution SB is accommodated in the microwells M and sealed with the oil VO, the microwell device is imaged by the microscope 33 to obtain a fluorescent image D (Step 7).

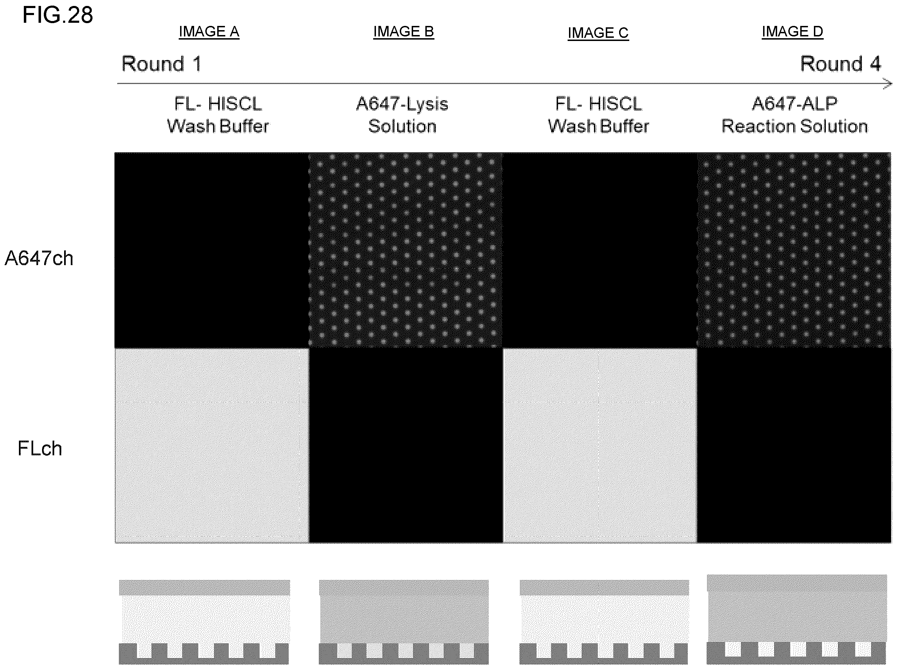

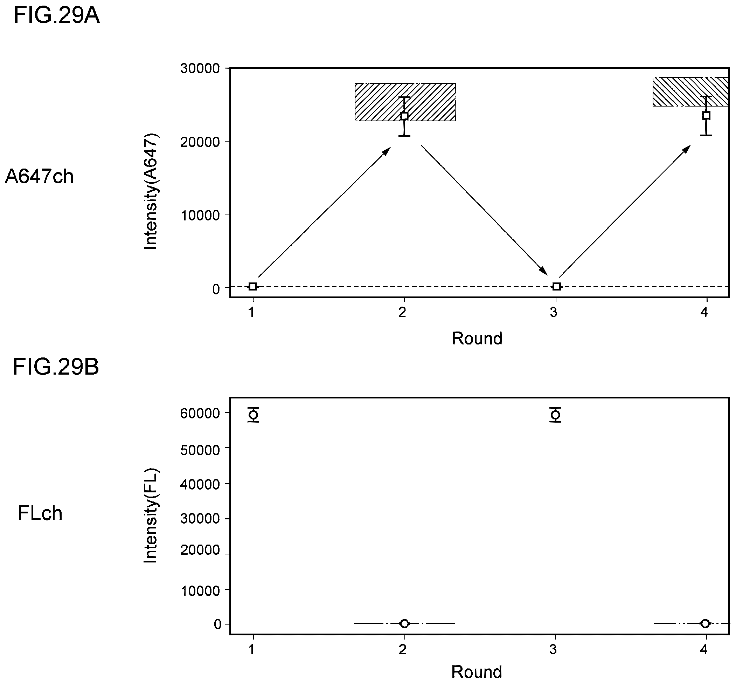

Results of the first experiment of Example 5 are described with reference to FIGS. 28 and 29 below. FIG. 28 is a diagram illustrating examples of the fluorescent images A to D. As illustrated in FIG. 28, in the images A and C, there are no bright spots in the A647ch fluorescence image, and the fluorescence intensity is high overall in the FLch fluorescence image. This indicates, in Steps 1 and 5 in which the images A and C are captured, the solution SA and the solution SB are not present in each microwell M, and the cleaning liquid WL is filled in each microwell M. As illustrated in FIG. 28, in the images B and D, bright spots corresponding to the microwells M are present in the A647ch fluorescence image, whereas no fluorescence is detected overall in the FLch fluorescence image. This indicates that in Steps 3 and 7 in which the images B and D are captured, each microwell M is filled with the solution SA or the solution SB, and no cleaning liquid WL is present in each microwell M. FIGS. 29A and 29B are graphs illustrating the fluorescence intensity in the A647ch fluorescence images and the FLch fluorescence images. As illustrated in FIG. 29A and 29B, in Steps 1 and 5 corresponding to Rounds 1 and 3, the fluorescence intensity from the solutions SA and SB is almost zero, and the fluorescence intensity from the cleaning liquid WL is high. In addition, in Steps 3 and 7 corresponding to Rounds 2 and 4, the fluorescence intensity from the solution SA and the solution SB is high, and the fluorescence intensity from the cleaning liquid WL is almost zero. From this, it can be seen that in Steps 1 and 5, neither the solution SA nor the solution SB is present in each microwell M, and each microwell M is filled with the cleaning liquid WL, and in Steps 3 and 7, each microwell M is filled with the solution SA or the solution SB, and no cleaning liquid WL is present in each microwell M. As illustrated in FIGS. 28 and 29, it is indicated that a highly accurate solution replacement is possible even for the solutions with different compositions, such as the A647/extraction solution (solution SA) and the A647/reaction solution (solution SB).

In the second experiment, the closed type microwell device to which the anti-PSA monoclonal antibodies are immobilized is used. Although the antibody-immobilized microwell device is used in anticipation of antigen-antibody reactions in the microwells, the reagents do not include antigens. As the reagents, the following mixed solutions are prepared in anticipation of carryover in each solution replacement in the first experiment. Note that the volatile oil used is AE-3000.

(1) The solutions prepared by mixing the Fluorescein/HISCL Washing So lution at the ratio of 10% (v/v), 1% (v/v), and 0% (v/v) with respect to t he A647/extraction solution.
(2) The solutions prepared by mixing the A647/extraction solution at the ratio of 10% (v/v), 1% (v/v), or 0% (v/v) with respect to the Fluorescei n/HISCL Washing Solution.
(3) The solutions prepared by mixing the Fluorescein/HISCL Washing So lution at the ratio of 10% (v/v), 1% (v/v), or 0% (v/v) with respect to th e A647/ALP reaction solution.

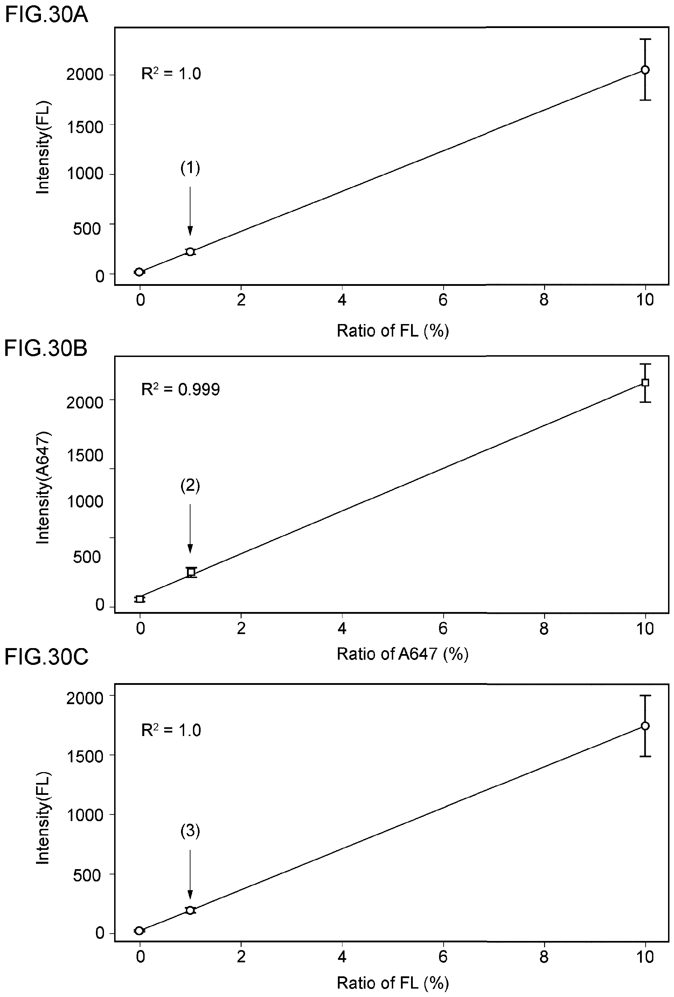

The fluorescence intensity emitted from each of the 10% (v/v), 1% (v/v), and 0% (v/v) solutions prepared in (1) is measured, to create a regression line indicating a relationship between the fluorescence intensity and the impurity concentration, as illustrated in FIG. 30A. Similarly, the fluorescence intensity emitted from each of the 10% (v/v), 1% (v/v), and 0% (v/v) solutions prepared in (2) is measured, to create a regression line indicating a relationship between the fluorescence intensity and the impurity concentration, as illustrated in FIG. 30B. The fluorescence intensity emitted from each of the 10% (v/v), 1% (v/v), and 0% (v/v) solutions prepared in (3) is measured, to create a regression line indicating a relationship between the fluorescence intensity and the impurity concentration, as illustrated in FIG. 30C.

In the second experiment, Steps 1 to 7 are carried out in the same manner as in the first experiment. To confirm reproducibility, in the second experiment, Steps 1 to 7 are carried out three times (first to third trials).

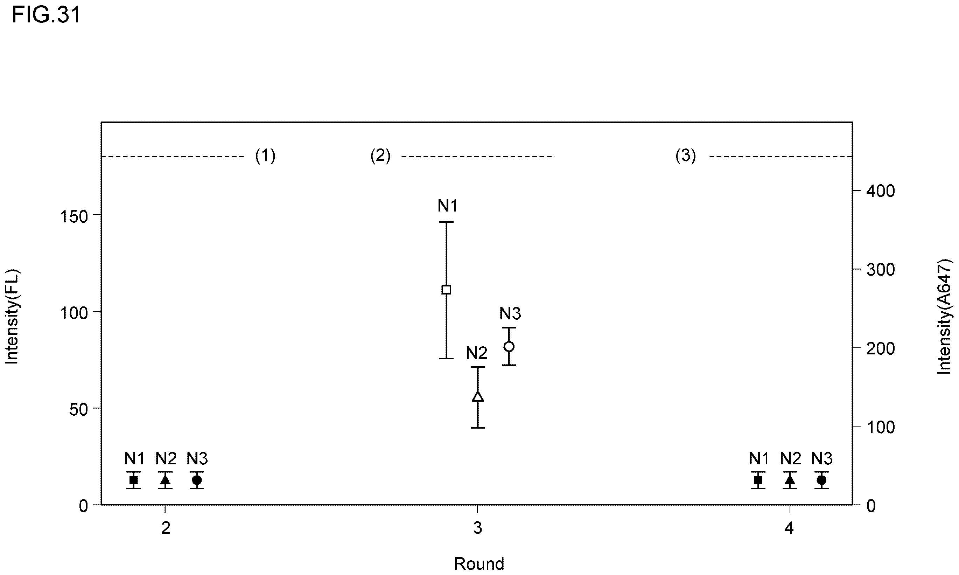

Results of the second experiment of Example 5 are described with reference to FIG. 31. Round 2 in FIG. 31 corresponds to Step 3, Round 3 in FIG. 31 corresponds to Step 5, and Round 4 in FIG. 31 corresponds to Step 7. The left vertical axis in FIG. 31 indicates the fluorescence intensity of the FLch fluorescence images in Rounds 2 and 4, and the right vertical axis in FIG. 31 indicates the fluorescence intensity of the A647ch fluorescence images in Round 3. N1 to N3 in FIG. 31 indicate the fluorescence intensities in the first to third trials, respectively. The dashed lines (1) to (3) in FIG. 31 indicate the fluorescence intensities that correspond to the impurity concentration of 1% obtained based on the regression lines illustrated in FIGS. 30A to 30C. That is, if the fluorescence intensity of the fluorescence image is as indicated by the dashed lines (1) to (3), which indicates that the carryover of 1% has occurred. As illustrated in FIG. 31, the fluorescence intensities in Rounds 2 to 4 are below the dashed lines (1) to (3), and thus the second experiment in the fifth example indicates that the solution replacement in the microspaces is possible with less than 1% carryover.

<Example 6>

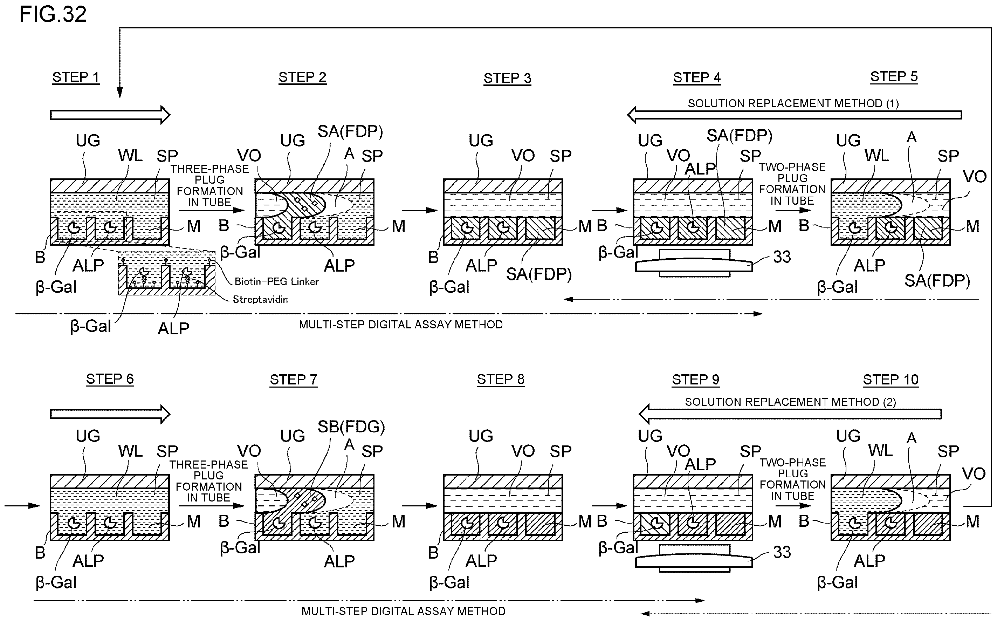

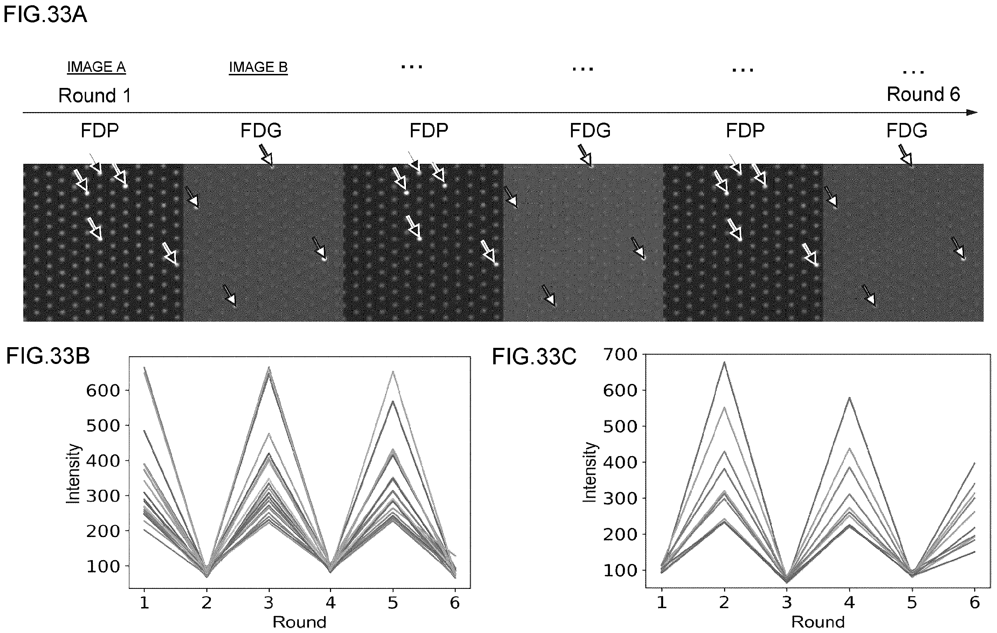

Example 6 is described with reference to FIGS. 32 and 33. In Example 6, the solution replacement is carried out using substrate soluti ons of different enzymes (enzymatic reactions using different enzymes in the microwells). Specifically, in Example 6, a continuous single molecu le detection is carried out using ALPs and β-Gals. In Example 6, in th e closed control system 100A illustrated in FIG. 4, the ALP fluorescent substrate solution is stored in the reagent A management part 16A, the β-Gal fluorescent substrate solution is stored in the reagent B managem ent part 16B, and the HISCL Washing Solution is stored in the storage tank 14. In Example 6, the closed type microwell device in which two t ypes of enzymes are immobilized is used.

FIG. 32 is a diagram illustrating a schematic view of a flow of Example 6. The closed type microwell device of Example 6 includes a plurality of microwells M to which the ALPs are immobilized and another plurality of microwells M to which the β-Gals are immobilized. In the microwell device, the space SP and each microwells M are filled with the fluorescein/HISCL Washing Solution WL (Step 1). Next, such as being illustrated in FIGS. 5 and 6, the three-phase plug (air A, ALP fluorescent substrate solution (solution SA), and oil VO arranged from the front in the flow direction) is formed in the tube CB and transferred to the microwell device (flow cell 31) (Step 2). As a result, the solution SA is accommodated in each microwells M and sealed with the oil VO (Step 3). Then, the ALPs immobilized in the microwells M and the ALP fluorescent substrate (FDP: Substrate for ALP) contained in the solution SA accommodated in the microwells M are reacted with each other, and the microwell device after the reaction is imaged with the microscope 33 to obtain a fluorescent image A (Step 4).

Next, such as being illustrated in FIGS. 7 and 8, the two-phase plug (air A, and HISCL Washing Solution WL arranged from the front in the flow direction) is formed in the tube CB and transferred to the microwell device (flow cell 31) (Step 5). This causes the space SP and each microwell M to be filled with the cleaning liquid WL (Step 6). Next, the three-phase plug (air A, β-Gal fluorescent substrate solution (solution SB), and oil VO arranged from the front in the flow direction) is formed in the tube CB and transferred to the microwell device (flow cell 31) (Step 7). As a result, the solution SB is accommodated in the microwells M and sealed with the oil VO (Step 8). Thereafter, the β-Gals fixed in the microwells M react with the β-Gal fluorescent substrate (FDG: Substrate for β-Gal) accommodated in the microwells M, and the microwell device after the reaction is imaged with the microscope 33 to obtain a fluorescent image B (Step 9). Thereafter, the two-phase plug (air A, and HISCL Washing Solution WL arranged from the front in the flow direction) is formed in the tube CB and transferred to the microwell device (flow cell 31) (Step 10). Such a cycle of Steps 1 to 10 is repeatedly executed.

FIGS. 33A to 33C are diagrams illustrating experimental results of Example 6. FIG. 33A is a diagram illustrating examples of fluorescent images A acquired in Step 4 in FIG 32 and fluorescent images B acquired in Step 9 in FIG 32. FIG. 33B is a diagram illustrating examples of fluorescence intensities of the microwells in which the ALPs are detected (each line corresponds to a bright spot in each of microwells). FIG. 33C is a diagram illustrating examples of fluorescence intensities of the microwells in which the β-Gals are detected (each line corresponds to a bright spot in each of microwells). As illustrated in FIGS. 33A to 33C, it is indicated that the fluorescence intensity increases in some of the microwells M in Step 4, where the ALPs have reacted with the fluorescent substrate, and the fluorescence intensity increases in other microwells M in Step 9, where the β-Gals have reacted with the fluorescent substrate. That is, in Example 6, it is indicated that the continuous single molecule detection of the ALP and the β-Gal is possible.

<Example 7>

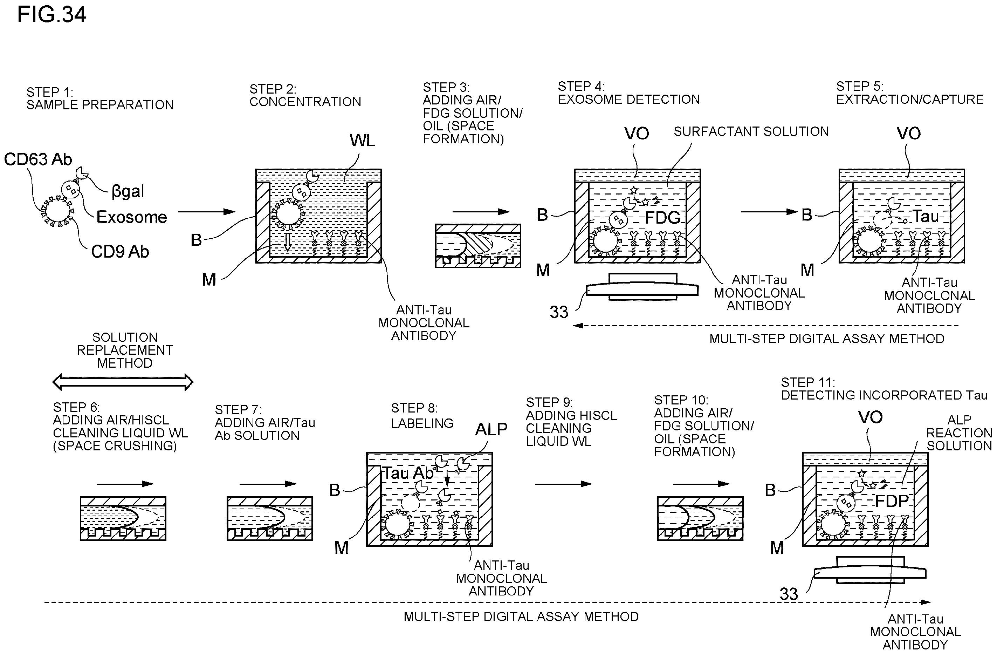

Example 7 is described with reference to FIGS. 34 to 37. In Example 7, a single exosome analysis (detection of a single particle and quantification of particle inclusions) is examined. Specifically, in Example 7, the dependency of detection of exosome-incorporated Tau on the addition amount of exosomes is examined. In the closed type control system 100A illustrated in FIG. 4, the ALP fluorescent substrate solution (containing dye) is stored in the reagent A management part 16A, the ALP-labeled anti-Tau antibody solution is stored in the reagent B management part 16B, the β-Gal fluorescent substrate/extraction solution (containing dye) is stored in the reagent C management part 16C, and HISCL Washing Solution is stored in the storage tank 14. In Example 7, the closed type microwell device to which the anti-Tau monoclonal antibodies are immobilized is used. In addition, a sample prepared containing the volatile oil (AE-3000) and the immune complexes including the magnetic particles, the exosomes, and the β-Gals is used.

FIG. 34 is a diagram illustrating a schematic view of a flow of Example 7. In FIG. 34, for ease of explanation, in some steps, only one of the plurality of microwells M is illustrated in an enlarged manner. As illustrated in FIG. 34, the sample (the immune complexes of the magnetic particles, the exosomes, and the β-Gal-labeled antibodies) is prepared and added to the microwell device (Step 1). By bringing a magnet (not illustrated) close to the microwell M, the immune complexes containing the magnetic particles move in a direction approaching the magnet. That is, a concentration (magnetic collection) step is carried out on the sample contained in the microwell M. In order to cause the immune complex to remain within the microwell M, the magnetic collection is continued in each of Steps 2 to 11 except for Step 4 (Step 2). Next, such as being illustrated in FIGS. 5 and 6, the three-phase plug (air A, β-Gal fluorescent substrate/extraction solution, and oil VO arranged from the front in the flow direction) is formed in the tube CB and transferred to the microwell device (flow cell 31). As a result, each microwell M is filled with the β-Gal fluorescent substrate/extraction solution and sealed with the oil VO. Furthermore, in the microwell M where the immune complex is attracted, the β-Gal reacts with the fluorescent substrate and emits fluorescence (Step 3).

The microwell device is imaged by the microscope 33 to obtain a fluorescent image A and a fluorescent image B (Step 4). Next, extracting and capturing of an exosome-incorporated Tau (exosomal Tau) is performed. That is, the exosome-incorporated Tau is extracted from the exosome by the action of the surfactant contained in the β-Gal fluorescent substrate/extraction solution, and then the extracted exosome-incorporated Tau is captured by the anti-Tau monoclonal antibodies immobilized in the microwell M (Step 5). Next, such as being illustrated in FIGS. 7 and 8, the two-phase plug (air A, and HISCL Washing Solution WL arraned from the front in the flow direction) is formed in the tube CB and transferred to the microwell device (flow cell 31). This causes the space SP and each microwell M to be filled with the cleaning liquid WL (Step 6). Next, the two-phase plug (air A, and ALP-labeled anti-Tau antibody solution arranged from the front in the flow direction) is formed and transferred to the microwell device (flow cell 31). As a result, the space SP and each microwell M are filled with the ALP-labeled anti-Tau antibody solution (Step 7). In the microwell M where the immune complex is collected, the ALP labeling of the exosome-incorporated Tau is carried out through the antigen-antibody reaction (Step 8).

Next, HISCL Washing Solution WL is transferred to the microwell device (flow cell 31). This causes the space SP and each microwell M to be filled with the cleaning liquid WL (Step 9). Next, such as being illustrated in FIGS. 5 and 6, the three-phase plug (air A, ALP fluorescent substrate solution, and oil VO arranged from the front in the flow direction) is formed in the tube CB and transferred to the microwell device (flow cell 31). As a result, each microwell M is filled with the ALP fluorescent substrate solution and sealed with the oil VO. Further, in the microwell M where the immune complex is collected, the ALP label reacts with the fluorescent substrate to emit fluorescence (Step 10). Nex, the microwell device is imaged by the microscope 33 to obtain a fluorescent image C (Step 11).

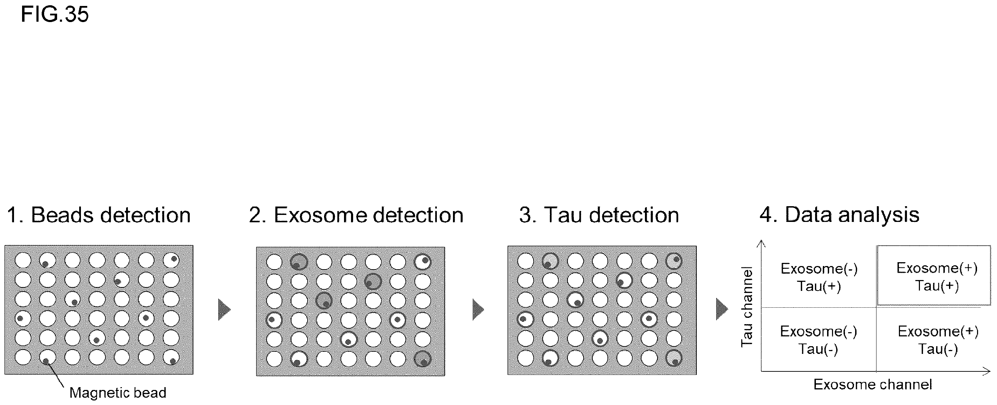

FIG. 35 is a diagram illustrating a schematic view of an analysis flow of Example 7. As illustrated in FIG. 35, the analysis flow of Example 7 includes four steps as follows. The analysis flow of Example 7 includes "Beads detection," "Exosome detection," "Tau detection," and "Data analysis" in this order. "Beads detection" is a process of identifying the microwell M in which the immune complex is attracted, based on the fluorescent image captured in Step 4. "Exosome detection" is a process of determining the intensity of fluorescence emitted from each microwell M that is identified in "Beads detection" based on the fluorescent image captured in Step 4. "Tau detection" is a process of determining the intensity of fluorescence emitted from each microwell M that is identified in "Beads detection" based on the fluorescent image captured in Step 11. "Data analysis" is a process of plotting on a scatter diagram for each microwell M that is identified in "Beads detection" based on the fluorescence intensity of the fluorescence image in Step 4 and the fluorescence intensity of the fluorescence image in Step 11. When this scatter plot is divided into four, the microwell that is plotted in an upper left region indicates that the exosome is not detected but the exosome-incorporated Tau is detected, the microwell that is plotted in an upper right region indicates that both the exosome and the exosome-incorporated Tau are detected, the microwell that is plotted in a lower left region indicates that neither the exosome nor the exosome-incorporated Tau are detected, and the microwell that is plotted in a lower right region indicates that the exosome is detected but the exosome-incorporated Tau is not detected.

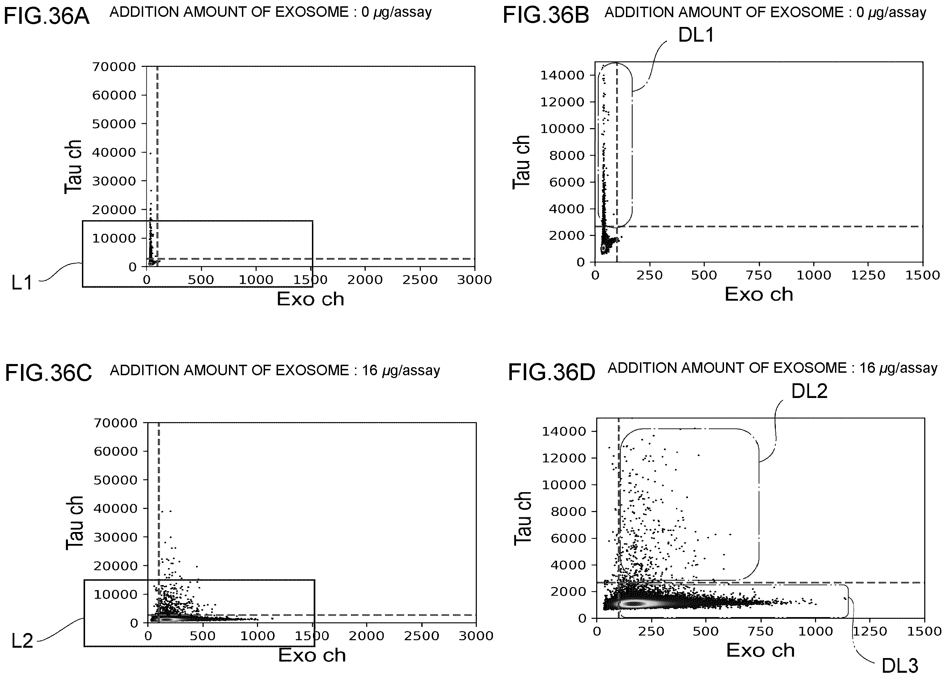

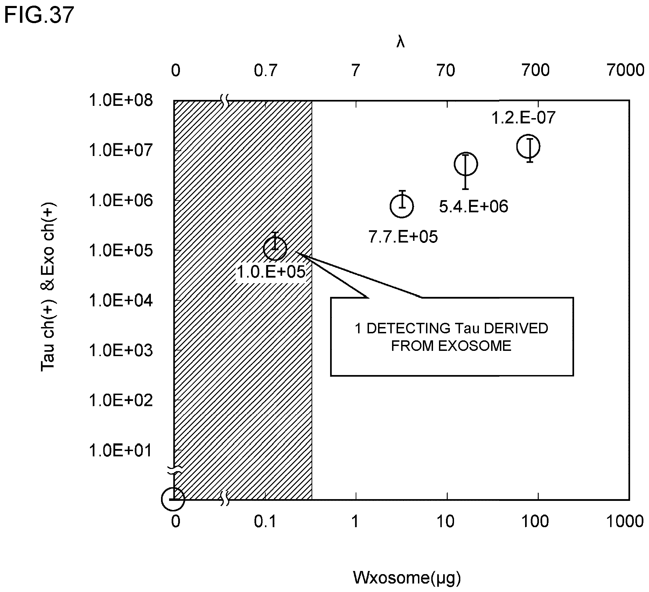

FIGS. 36A to 36D and 37 are diagrams illustrating experimental results of Example 7. The horizontal axis in FIGS. 36A to 36D indicates the fluorescence intensity upon detection of the exosome (fluorescence intensity obtained by "Exosome detection"), and the vertical axis in FIGS. 36 A to 36D indicates the fluorescence intensity upon detection of the Tau (fluorescence intensity obtained by "Tau detection"). FIGS. 36A and 36B illustrate the detection results when Steps 2 to 11 are performed using the sample prepared with no exosomes in Step 1 illustrated in FIG. 34, and FIGS. 36C and 36D illustrate the detection results when Steps 2 to 11 are performed using the sample prepared in Step 1 illustrated in FIG. 34 with containing 16 $\mu$g of exosomes per sample. FIG. 36B is an enlarged view of a portion enclosed by the solid line L1 in FIG. 36A, and FIG. 36D is an enlarged view of a portion enclosed by the solid line L2 in FIG. 36C. As illustrated in FIG. 36B, in the sample prepared with no exosome, most of the plots are located in the lower left region, indicating that almost no false positives occurs. Note that the plots in the upper left region are thought to be due to the influence of the ALP-labeled antibodies that are nonspecifically adsorbed to the microwells. Moreover, as illustrated in FIG. 36D, in the sample prepared by containing the exosomes, many plots are present in the lower right region, indicating that the exosomes contained in the sample are detected. There are also plots in the upper right region, indicating that the exosome-incorporated Tau is also detected. In addition, since all of the exosome-incorporated Tau is not necessarily encapsulated in the exosomes, it is thought that the number of plots in the upper right region is fewer than the number of plots in the lower right region.

FIG. 37 is a diagram illustrating experimental results in which the average number ($\lambda$) of exosomes captured by magnetic particles is changed in sample preparation in Step 1, and Steps 2 to 11 and the analysis flow of Example 7 are performed. In the experimental results, the number of Tau ch(+)&Exo ch(+) with $\lambda$ of approximately 0.7 (i.e., the number of plots located in the upper right region in the scatter diagram of "Data analysis" in FIG. 35) is $1 \times 10^5$. This indicates that the exosome-incorporated Tau is detected from the immune complex in which only one exosome is captured. In other words, Example 7 indicates that the single exosome analysis can be realized.

<Other embodiments>

The above-described embodiments are intended to facilitate understanding of the present invention and should not be understood to limit the present invention. One or more embodiments may be changed and modified (for example, embodiments may be combined, or part of the configuration of each embodiment may be omitted) without departing from the scope of the invention. In addition, one or more embodiments include equivalents thereof.

As a supplementary note, a solution replacement method and a digital assay method according to an embodiment are summarized below.

. A solution replacement method according to an embodiment may be a solution replacement method of replacing a solution in a plurality of microwells formed on a substrate. The solution replacement method may include:

replacing an immiscible liquid that is immiscible to a first solution and seals the plurality of microwells that are filled with the first solution, with a gas; and

filling the plurality of microwells with a second solution by introducing the second solution onto the substrate on which the immiscible liquid has been replaced with the gas.

The solution replacement method may further include:

after the filling of the plurality of microwells with the second solution, sealing the plurality of microwells that is filled with the second solution with a second immiscible liquid that is immiscible to the second solution by introducing the second immiscible liquid onto the substrate.

In the solution replacement method,
a second substrate may be provided above the plurality of microwells such that the immiscible liquid is accommodated in a space provided between the second substrate and the substrate on which the plurality of microwells are formed.
In the solution replacement method,
the replacing of the immiscible liquid with the gas may include introducing the gas into the space through an inlet port provided in a vicinity of one end of the space and discharging the immiscible liquid from the space through an outlet port provided in a vicinity of the other end of the space.
In the solution replacement method,
an upper side of the substrate on which the plurality of microwells are formed may be open.
In the solution replacement method,
the replacing of the immiscible liquid with the gas may include aspirating the immiscible liquid from the upper side of the substrate with a pipette.
In the solution replacement method,
the immiscible liquid may be an oil having a vapor pressure of 0.15 kPa or more at 25 °C.
In the solution replacement method,
the gas may be an air.
A digital assay method according to an embodiment may be a digital assay method of performing a multi-stage digital assay using a plurality of microwells formed on a substrate. The digital assay method may include:

performing a first assay in the plurality of microwells that are filled with a first assay reagent and sealed with an immiscible liquid that is immiscible to the first assay reagent; replacing the immiscible liquid sealing the plurality of microwells with a gas;
filling the plurality of microwells with a second assay reagent by introducing the second assay reagent onto the substrate in which the immiscible liquid has been replaced with the gas;
sealing the plurality of microwells that are filled with the second assay reagent with a second immiscible liquid that is immiscible to the second assay reagent, by introducing the second immiscible liquid onto the substrate; and
performing a second assay in the plurality of microwells that are filled with the second assay reagent and sealed with the second immiscible liquid.

The digital assay method may further include:

introducing biological particles into the plurality of microwells, prior to the performing of the first assay, wherein the first assay is an assay for detecting surface molecules of the biological particles; and
extracting inclusions of the biological particles from the biological particles in the plurality of microwells, prior to the performing of the second assay, wherein the second assay is an assay for detecting the inclusions.

In the digital assay method,
the immiscible liquid may be an oil having a vapor pressure of 0.15 kPa or more at 25 °C.
In the digital assay method,
the gas may be an air.

**Claims**

1. A solution replacement method of replacing a solution in a plurality of microwells formed on a substrate, comprising

replacing an immiscible liquid that is immiscible to a first solution and seals the plurality of microwells that are filled with the first solution, with a gas; and
filling the plurality of microwells with a second solution by introducing the second solution onto the substrate on which the immiscible liquid has been replaced with the gas.

2. The solution replacement method according to claim 1, further comprising:
after the filling of the plurality of microwells with the second solution, sealing the plurality of microwells that is filled with the second solution with a second immiscible liquid that is immiscible to the second solution by introducing the second immiscible liquid onto the substrate.

3. The solution replacement method according to claim 1, wherein
a second substrate is provided above the plurality of microwells such that the immiscible liquid is accommodated in a space provided between the second substrate and the substrate on which the plurality of microwells are formed.

4. The solution replacement method according to claim 3, wherein
the replacing of the immiscible liquid with the gas comprises introducing the gas into the space through an inlet port provided in a vicinity of one end of the space and discharging the immiscible liquid from the space through an outlet port provided in a vicinity of the other end of the space.

5. The solution replacement method according to claim 1, wherein
an upper side of the substrate on which the plurality of microwells are formed is open.

6. The solution replacement method according to claim 5, wherein
the replacing of the immiscible liquid with the gas comprises aspirating the immiscible liquid from the upper side of the substrate with a pipette.

7. The solution replacement method according to claim 1, wherein
the immiscible liquid is an oil having a vapor pressure of 0.15 kPa or more at 25 °C.

8. The solution replacement method according to claim 1, wherein
the gas is an air.

9. A digital assay method of performing a multi-stage digital assay using a plurality of microwells formed on a substrate, comprising:

performing a first assay in the plurality of microwells that are filled with a first assay reagent and sealed with an immiscible liquid that is immiscible to the first assay reagent;
replacing the immiscible liquid sealing the plurality of microwells with a gas;
filling the plurality of microwells with a second assay reagent by introducing the second assay reagent onto the substrate in which the immiscible liquid has been replaced with the gas;
sealing the plurality of microwells that are filled with the second assay reagent with a second immiscible liquid that is immiscible to the second assay reagent, by introducing the second immiscible liquid onto the substrate; and
performing a second assay in the plurality of microwells that are filled with the second assay reagent and sealed with the second immiscible liquid.

10. The digital assay method according to claim 9, further comprising:

introducing biological particles into the plurality of microwells, prior to the performing of the first assay, wherein the first assay is an assay for detecting surface molecules of the biological particles; and
extracting inclusions of the biological particles from the biological particles in the plurality of microwells, prior to the performing of the second assay, wherein the second assay is an assay for detecting the inclusions.

11. The digital assay method according to claim 9, wherein
the immiscible liquid is an oil having a vapor pressure of 0.15 kPa or more at 25 °C.

12. The digital assay method according to claim 9, wherein
the gas is an air.

FIG.1

# FIG.2

**DIGITAL ASSAY**

✓ CONFINE ONE PARTICLE AT A TIME IN MICROSPACE, AND SEAL TARGET PARTICLE IN MICROSPACE

1.CONCENTRATION | 2.MEASURING SURFACE ANTIGEN | 3. EXTRACTION/ CAPTURE | 4.LABELING | 5. MEASURING INCORPORATED POPROTEIN | 6.LABELING | 7. MEASURING INCORPORATED NUCLEIC ACID

REPEATING LABELING AND MEASURING

EP 4 541 462 A1

FIG.3

STEP 1
PERFORMING ASSAY
USING SOLUTION SA

STEP 2

STEP 3

STEP 4
PERFORMING ASSAY
USING SOLUTION SB

MWD

VO   UG   SP

SB   A   UG   VO   SP

VO   SP   UG   SB

UG   VO   SP

M   SA   B

M   SA   B

M   B   SP

M   SB   B

MULTI-STEP (CONTINUOUS) ASSAY

EP 4 541 462 A1

FIG.4

100A

FIG.5

⊗ : CLOSED STATE

◯ : OPEN STATE

STEP 1

STEP 2

STEP 3

STEP 4

# FIG.6

⊗: CLOSED STATE

○: OPEN STATE

STEP 1

PV1

THREE-PHASE PLUG

CB

PV9

18  19

31

STEP 2

WASH
BUFFER

PV1  CB  PV9

18  19

31

DL

FIG.7

⊗: CLOSED STATE

○: OPEN STATE

# FIG.8

⊗: CLOSED STATE

○: OPEN STATE

DL

STEP 1

PV7

18  19

PV1

TWO-PHASE PLUG
FORMATION

CB          PV9

31

STEP 2

PV7

18  19

WASH
BUFFER

PV1    CB        PV9

31

EP 4 541 462 A1

FIG.9

MWD

IP    SP    UG    OP    E2

E1

APPROX. 100 $\mu$m

3.0 $\mu$m    3.0 $\mu$m

DT

B

M

FIG.10

MWD

20 mm (or 42 mm)

3 mm (or 4 mm)

B

UG

E — — — E

FIG.11

100B

FIG.12

EP 4 541 462 A1

FIG.13

FIG.14

FIG.15

STEP 1    STEP 2                    STEP 3                    STEP 4

EP 4 541 462 A1

## FIG.16

STEP 1

VO SA UG SP B M 33

Biotin-Antibody
Streptavidin
Biotin-PEG Linker

STEP 2

A UG SP B M SA VO

STEP 3

VO UG SP B M SA 33

STEP 4

WL UG SP B M SA

STEP 5

WL UG SP B M 33

EP 4 541 462 A1

FIG.17

STEP 1

VO    SA    UG
                    SP

B

M

33

Biotin-Antibody

Streptavidin

Biotin-PEG Linker

STEP 2

WL              UG
                    SP

B

VO

M    SA

STEP 3

WL         UG
                SP

B

VO

M         SA

33

FIG.18

EXAMPLE 1

IMAGE A
AFTER ADDING OIL

IMAGE B
AFTER ADDING AIR

IMAGE C
AFTER ADDING CLEANING LIQUID

COMPARATIVE EXAMPLE

IMAGE A'
AFTER ADDING OIL

IMAGE C'
AFTER ADDING CLEANING LIQUID

EP 4 541 462 A1

# FIG.19

STEP 1 STEP 2 STEP 3 STEP 4

Biotin-Antibody
Streptavidin
Biotin-PEG Linker

STEP 5 STEP 6 STEP 7

FIG.20

# FIG.21

STEP 1 → STEP 2 → STEP 3 → STEP 4

STEP 5 → STEP 6 → STEP 7

EP 4 541 462 A1

# FIG.22

AFTER ADDING OIL

IMAGE A

AFTER REMOVING OIL

IMAGE B

AFTER ADDING CLEANING LIQUID

IMAGE C

FIG.23

FIG.24

FIG.25

EP 4 541 462 A1

FIG.26

FIG.27

STEP 1 — WL SP UG, SA, B, THREE-PHASE PLUG FORMATION IN TUBE, M, 33, Biotin-Antibody, Streptavidin, Biotin-PEG Linker

STEP 2 — VO A UG, SP, B, SA, WL, M

STEP 3 — VO SP UG, B, M, SA, 33

STEP 4 — WL A UG, SP, B, VO, WL, SA, M, TWO-PHASE PLUG FORMATION IN TUBE, SOLUTION REPLACEMENT METHOD

STEP 5 — WL UG, SP, B, M, 33, THREE-PHASE PLUG FORMATION IN TUBE

STEP 6 — VO A UG, SP, B, SB, WL, M

STEP 7 — VO SP UG, B, M, SB, 33

EP 4 541 462 A1

FIG.28

FIG.29A

A647ch

FIG.29B

FLch

EP 4 541 462 A1

FIG.30A

FIG.30B

FIG.30C

FIG.31

# FIG.32

FIG.33A

FIG.33B

FIG.33C

# FIG.34

STEP 1:
SAMPLE PREPARATION

STEP 2:
CONCENTRATION

STEP 3:
ADDING AIR/
FDG SOLUTION/
OIL (SPACE
FORMATION)

STEP 4:
EXOSOME DETECTION

STEP 5:
EXTRACTION/CAPTURE

CD63 Ab

βgal

Exosome

CD9 Ab

B

M

WL

ANTI-Tau
MONOCLONAL
ANTIBODY

VO    SURFACTANT SOLUTION

B

FDG

M

33

ANTI-Tau
MONOCLONAL
ANTIBODY

VO

B

Tau

M

ANTI-Tau
MONOCLONAL
ANTIBODY

MULTI-STEP DIGITAL ASSAY METHOD

SOLUTION
REPLACEMENT
METHOD

STEP 6:
ADDING AIR/HISCL
CLEANING LIQUID WL
(SPACE CRUSHING)

STEP 7:
ADDING AIR/Tau
Ab SOLUTION

STEP 8:
LABELING

ALP

STEP 9:
ADDING HISCL
CLEANING
LIQUID WL

STEP 10:
ADDING AIR/
FDG SOLUTION/
OIL (SPACE
FORMATION)

STEP 11:
DETECTING INCORPORATED Tau

B

Tau Ab

M

ANTI-Tau
MONOCLONAL
ANTIBODY

VO

B

FDP

M

33

ALP
REACTION
SOLUTION

ANTI-Tau
MONOCLONAL
ANTIBODY

MULTI-STEP DIGITAL ASSAY METHOD

EP 4 541 462 A1

FIG.35

FIG.36A  ADDITION AMOUNT OF EXOSOME : 0 µg/assay

FIG.36B  ADDITION AMOUNT OF EXOSOME : 0 µg/assay

DL1

FIG.36C  ADDITION AMOUNT OF EXOSOME : 16 µg/assay

FIG.36D  ADDITION AMOUNT OF EXOSOME : 16 µg/assay

DL2

DL3

EP 4 541 462 A1

FIG.37

Europäisches
Patentamt

European
Patent Office

Office européen
des brevets

# EUROPEAN SEARCH REPORT

**Application Number**

EP 24 20 5538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/391210 A1 (HANDIQUE KALYAN [US]) 17 December 2020 (2020-12-17) | 1,8 | INV. B01L3/00 |
| Y | * paragraph [0060] - paragraph [0063]; figure 3D * <br> * paragraphs [0125], [0126], [0138], [0139] * | 3-6 | |
| X | US 2022/226815 A1 (BROUZES ERIC [US] ET AL) 21 July 2022 (2022-07-21) <br> * paragraphs [0003], [0088] - [0095]; claims 25-28; figures 2A-E * | 1,2,7-12 | |
| Y | US 2023/043483 A1 (GLASS JENNIFER LYNN [US] ET AL) 9 February 2023 (2023-02-09) <br> * figures 4A-D'' * | 3-6 | |

|  |
|---|
| **TECHNICAL FIELDS SEARCHED (IPC)** |
| B01L <br> C12Q |

The present search report has been drawn up for all claims

| Place of search | Date of completion of the search | Examiner |
|---|---|---|
| The Hague | 12 March 2025 | Vlassis, Maria |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

## ANNEX TO THE EUROPEAN SEARCH REPORT
## ON EUROPEAN PATENT APPLICATION NO.

EP 24 20 5538

This annex lists the patent family members relating to the patent documents cited in the above-mentioned European search report.
The members are as contained in the European Patent Office EDP file on
The European Patent Office is in no way liable for these particulars which are merely given for the purpose of information.

12-03-2025

| Patent document cited in search report | Publication date | Patent family member(s) | | Publication date |
|---|---|---|---|---|
| US 2020391210 A1 | 17-12-2020 | AU | 2020290981 A1 | 16-12-2021 |
| | | AU | 2024201054 A1 | 07-03-2024 |
| | | CA | 3143241 A1 | 17-12-2020 |
| | | CN | 114302643 A | 08-04-2022 |
| | | CN | 118291246 A | 05-07-2024 |
| | | EP | 3982716 A1 | 20-04-2022 |
| | | JP | 7356519 B2 | 04-10-2023 |
| | | JP | 2022536493 A | 17-08-2022 |
| | | JP | 2024012280 A | 30-01-2024 |
| | | KR | 20220033484 A | 16-03-2022 |
| | | SG | 11202112898W A | 30-12-2021 |
| | | US | 2020391210 A1 | 17-12-2020 |
| | | US | 2023338952 A1 | 26-10-2023 |
| | | WO | 2020251802 A1 | 17-12-2020 |
| US 2022226815 A1 | 21-07-2022 | US | 2022226815 A1 | 21-07-2022 |
| | | WO | 2020227668 A1 | 12-11-2020 |
| US 2023043483 A1 | 09-02-2023 | AU | 2022307677 A1 | 25-01-2024 |
| | | CN | 118234564 A | 21-06-2024 |
| | | EP | 4366878 A2 | 15-05-2024 |
| | | KR | 20240033032 A | 12-03-2024 |
| | | US | 2023043483 A1 | 09-02-2023 |
| | | WO | 2023283452 A2 | 12-01-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023177411 A

- JP 2023177460 A

**Non-patent literature cited in the description**

- An Automated Microwell Platform for Large-Scale Single Cell RNA-Seq. *Scientific Reports*, 2016, vol. 6